# EUROPEAN PATENT APPLICATION

(11) **EP 2 101 498 A1**
(43) Date of publication of application: **16.09.2009**
(21) Application number: 09003402.6
(22) Date of filing: 09.03.2009
(51) Int. Cl.: H04N 7/16

(54) **Data communication device, data communication method, data requesting device, data requesting method, and data communication system**

(30) Priority: 10.03.2008 JP 2008060328
(71) Applicant: Sony Corporation, Tokyo 108-0075 (JP)
(72) Inventor: Kageyama, Yuichi, Tokyo, 108-0075 (JP); Onoe, Atsushi, Tokyo, 108-0075 (JP)
(74) Representative: Müller - Hoffmann & Partner

(57) **Abstract**

A data communication device is arranged with a setup unit for setting a true title of content data as predetermined data of content data set with viewing restriction, and setting a character string different from the true title of the content data as title data of the content data; a communication unit for performing data communication with a data requesting device; and a control unit for controlling transmission from the communication unit of the true title set as the predetermined data and the character string set as the title data based on whether or not a transmission request received from the data requesting device by the communication unit is a request based on input of predetermined information.

## Description

### CROSS REFERENCES TO RELATED APPLICATIONS

The present invention contains subject matter related to Japanese Patent Application JP 2008-060328 filed in the Japan Patent Office on March/ 10, 2008, the entire contents of which being incorporated herein by reference.

### BACKGROUND OF THE INVENTION

### FIELD OF THE INVENTION

The present invention relates to a data communication device, a data communication method, a data requesting device, a data requesting method, and a data communication system.

### DESCRIPTION OF THE RELATED ART

Recently, technique of building a home network by mutually connecting equipments in the household according to UPnP (Universal Plug and Play) standard and DLNA (Digital Living Network Alliance) guideline is being given attention. The equipments in the household are broadly classified into DMP (Digital Media Player) for reproducing content data, or DMS (Digital Media Server) for providing content data to the DMP.

In the UPnP standard and the DLNA guide line, content in which the DMS sets a parental control (viewing restriction) to the content data is described to prevent children under eighteen years old from viewing content data containing violence and sexual scenes.

Japanese Patent Application Laid-Open No. 2007-306428 describes the content which the receiver corresponding to parental control sets the viewing restriction time, and receives television broadcast if the current time is not the viewing restriction time.

### SUMMARY OF THE INVENTION

However, in the UPnP standard and the DLNA guideline, the parental control in the DMP is not particularly defined. Therefore, even if the DMS sets viewing restriction on the content data, the DMP not corresponding to parental control may present information related to the relevant content data to the user as is.

The present invention addresses the above-identified, and other problems associated with conventional methods and devices, and it is desirable to provide a new and improved data communication device capable of realizing parental control in a data requesting device regardless of the functions of the data requesting device such as the DMP, a data communication method, a data requesting device, a data requesting method, and a data communication system.

According to an embodiment of the present invention, there is provided a data communication device including: a setup unit for setting a true title of content data as predetermined data of content data set with viewing restriction, and setting a character string different from the true title of the content data as title data of the content data; a communication unit for performing data communication with a data requesting device; and a control unit for controlling transmission from the communication unit of the true title set as the predetermined data and the character string set as the title data based on whether or not a transmission request received from the data requesting device by the communication unit is a request based on input of predetermined information.

In such configuration, the control unit controls the transmission of the true title of the content data and the character string different from the true title according to whether or not a transmission request based on the input of the predetermined information is made from the data requesting device. Therefore, the data communication device can change the data to transmit to the data requesting device according to whether or not the data requesting device has a function of making a transmission request based on the input of the predetermined information.

The control unit may transmit the character string as the title data from the communication unit if the transmission request received from the data requesting device by the communication unit is not the request based on the input of the predetermined information, and transmit the true title as the title data from the communication unit if the transmission request received from the data requesting device by the communication unit is the request based on the input of the predetermined information.

The control unit may not transmit the true title set as the predetermined data from the communication unit if the transmission request received from the data requesting device by the communication unit is not the request based on the input of the predetermined information, and may transmit the true title set as the predetermined data from the communication unit if the transmission request received from the data requesting device by the communication unit is the request based on the input of the predetermined information.

The data communication device may further include a storage unit for hierarchically storing metadata of content data including the predetermined data or the title data at a lower order of higher order metadata, and the control unit may transmit metadata arranged at a lower order of higher order metadata to the data requesting device if a transmission request of metadata arranged at a lower order of the higher order metadata set with viewing restriction is received from the data requesting device by the communication unit, and the transmission request of the metadata is a request based on input of the predetermined information.

The data communication device may further include a storage unit for storing content data, and the control unit may transmit the content data from the communication unit if the transmission request of the content data set with the viewing restriction in the storage unit is received from the data requesting device by the communication unit and the transmission request of the content data contains specific information.

According to another embodiment of the present invention, there is provided a data communication method including the steps of: setting a true title of content data as predetermined data of content data set with viewing restriction, and setting a character string different from the true title of the content data as title data of the content data; receiving a transmission request from a data requesting device; and controlling transmission from the communication unit of the true title set as the predetermined data and the character string set as the title data based on whether or not the transmission request is a request based on input of predetermined information.

According to another embodiment of the present invention, there is provided a data requesting device including: a communication unit for communication with a data communication device for setting a true title of content data as predetermined data of content data set with viewing restriction, setting a character string different from the true title of the content data as title data of the content data, receiving a transmission request, and controlling transmission from the communication unit of the true title set as the predetermined data and the character string set as the title data based on whether or not the transmission request is a request based on input of predetermined information; an input unit input with predetermined information by a user; and a control unit for transmitting the transmission request based on the input of the predetermined information from the communication unit to the data communication device.

According to another embodiment of the present invention, there is provided a data requesting method including the steps of: inputting predetermined information by a user; and transmitting a transmission request based on input of the predetermined information to a data communication device for setting a true title of content data as predetermined data of content data set with viewing restriction, setting a character string different from the true title of the content data as title data of the content data, receiving a certain request, and controlling transmission from a communication unit of the true title set as the predetermined data and the character string set as the title data based on whether or not the request is the transmission request based on input of the predetermined information.

According to another embodiment of the present invention, there is provided a data communication system including a data requesting device and a data communication device. More specifically, the data requesting device includes: a first communication unit for performing data communication, an input unit input with predetermined information by a user, and a first control unit for transmitting a transmission request based on the input of the predetermined information from the communication unit. The data communication device includes a setup unit for setting a true title of content data as predetermined data of content data set with viewing restriction, and setting a character string different from the true title of the content data as title data of the content data; a second communication unit for performing data communication with the data requesting device; and a second control unit for controlling transmission from the communication unit of the true title set as the predetermined data and the character string set as the title data based on whether or not a transmission request received from the data requesting device by the communication unit is a request based on the input of the predetermined information.

According to another embodiment of the present invention, there is provided a data communication device including: a storage unit for storing content data and metadata indicating whether or not viewing restriction is set on the content data in correspondence to each other; a communication unit for receiving a transmission request of arbitrary content data from a data requesting device; and a control unit for not transmitting the arbitrary content data from the communication unit if the viewing restriction is set on the arbitrary content data and specific information is not contained in the transmission request, and transmitting the arbitrary content data from the communication unit if the viewing restriction is set on the arbitrary content data and the specific information is contained in the transmission request.

According to another embodiment of the present invention, there is provided a data communication method including the steps of: receiving a transmission request of arbitrary content data from a data requesting device; not transmitting the arbitrary content data if viewing restriction is set on the arbitrary content data and specific information is not contained in the transmission request; and transmitting the arbitrary content data if the viewing restriction is set on the arbitrary content data and the specific information is contained in the transmission request.

According to another embodiment of the present invention, there is provided a data requesting device including: a communication unit communicating with a data communication device for receiving a transmission request of arbitrary content data, not transmitting the arbitrary content data if viewing restriction is set on the arbitrary content data and specific information is not contained in the transmission request, and transmitting the arbitrary content data if the viewing restriction is set on the arbitrary content data and the specific information is contained in the transmission request; an input unit performed with a predetermined operation input by a user; and a control unit for transmitting the transmission request containing the specific information from the communication unit to the data communication device when the predetermined operation input is performed.

According to another embodiment of the present invention, there is provided a data requesting method including the steps of: performing a predetermined operation input by a user; and transmitting a transmission request containing specific information to a data communication device when the predetermined operation input is performed, the data communication device receiving a request of arbitrary content data, not transmitting the arbitrary content data if viewing restriction is set on the arbitrary content data and specific information is not contained in the request, and transmitting the arbitrary content data if the viewing restriction is set on the arbitrary content data and the request is the transmission request containing the specific information.

According to another embodiment of the present invention, there is provided a data communication system including a data requesting device and a data communication device. More specifically, the data requesting device includes a first communication unit for performing data communication, an input unit performed with a predetermined operation input by a user, and a first control unit for transmitting a transmission request containing specific information from the first communication unit to the data communication device when the predetermined operation input is performed. The data communication device includes a storage unit for storing content data and metadata indicating whether or not viewing restriction is set on the content data in correspondence to each other, a second communication unit for receiving a request of arbitrary content data from the data requesting device, and a second control unit for not transmitting the arbitrary content data from the second communication unit if the viewing restriction is set on the arbitrary content data and specific information is not contained in the request, and transmitting the arbitrary content data from the second communication unit if the viewing restriction is set on the arbitrary content data and the request is the transmission request containing the specific information.

According to the embodiments of the present invention described above, parental control in the data requesting device can be realized irrespective of the function of the data requesting device such as DMP.

### BRIEF DESCRIPTION OF THE DRAWINGS

FIG. 1 is an explanatory view showing a configuration of a content providing system 1 including a home network according to the present embodiment;
FIG. 2 is a sequence chart showing a flow of communication carried out between a DMS and a DMP;
FIG. 3 is an explanatory view showing a hardware configuration of the DMS according to the present embodiment;
FIG. 4 is a function block diagram showing the configuration of the DMS according to the present embodiment;
FIG. 5 is an explanatory view schematically showing a tree structure of the metadata;
FIG. 6 is an explanatory view showing a configuration of the metadata corresponding to a container;
FIG. 7 is an explanatory view showing a configuration of the metadata corresponding to an item;
FIG. 8 is an explanatory view showing a specific example of the device data;
FIG. 9 is a function block diagram showing a configuration of the DMP;
FIG. 10 is an explanatory view showing a specific example of a CDS: Browse request;
FIG. 11 is an explanatory view showing one example of a content list screen;
FIG. 12 is an explanatory view showing a specific example of a CDS: X-Browse request;
FIG. 13 is an explanatory view showing another example of a content list screen;
FIG. 14 is an explanatory view showing a specific example of the HTTP GET (content data);
FIG. 15 is a flowchart showing a flow of the setup operation of the device data and the container executed in the DMS;
FIG. 16 is a flowchart showing a flow in which the setup of the metadata is performed by the tree structure management unit;
FIG. 17 is a flowchart showing the flow in which the setup of the metadata is performed by the tree structure management unit;
FIG. 18 is a flowchart showing the flow in which the setup of the metadata is performed by the tree structure management unit;
FIG. 19 is a flowchart showing the flow in which the setup of the metadata is performed by the tree structure management unit;
FIG. 20 is a flowchart showing a flow in which the DMS transmits the metadata to the DMP;
FIG. 21 is a flowchart showing another example of the flow in which the DMS transmits the metadata to the DMP;
FIG. 22 is a flowchart showing a flow of the transmission control of the content data in the DMS;
FIG. 23 is a flowchart showing a flow in which the DMP acquires the content data using the PIN code of the DMS;
FIG. 24 is a flowchart showing a flow in which the DMP acquires the content data using the PIN code of the DMS;
FIG. 25 is a flowchart showing a flow of the transmission control of the content data in the DMS; and
FIG. 26 is a flowchart showing a flow in which the DMP acquires content data using the PIN code of the DMP.

### DETAILED DESCRIPTION OF THE PREFERRED EMBODIMENTS

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

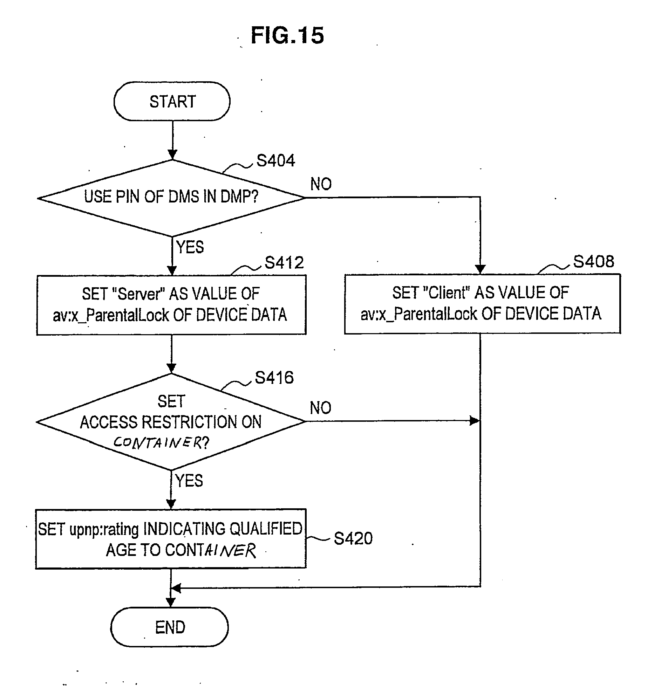

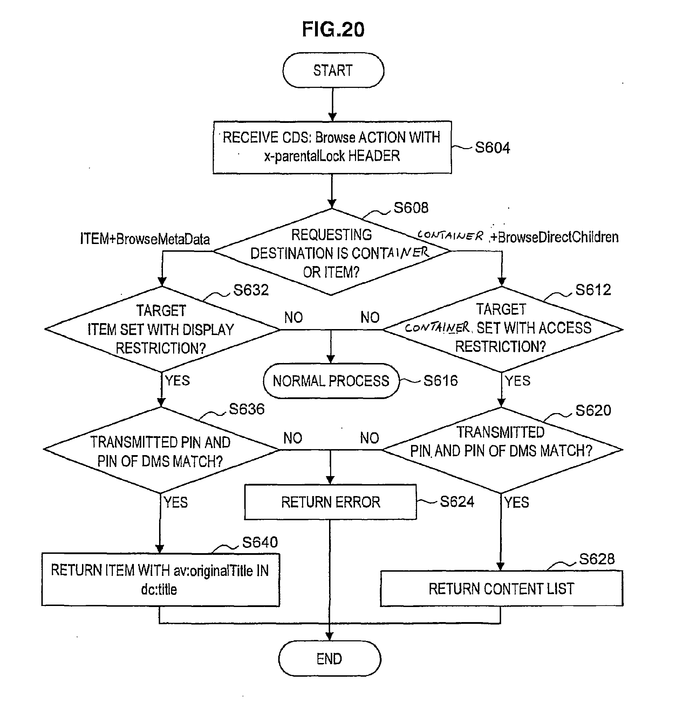

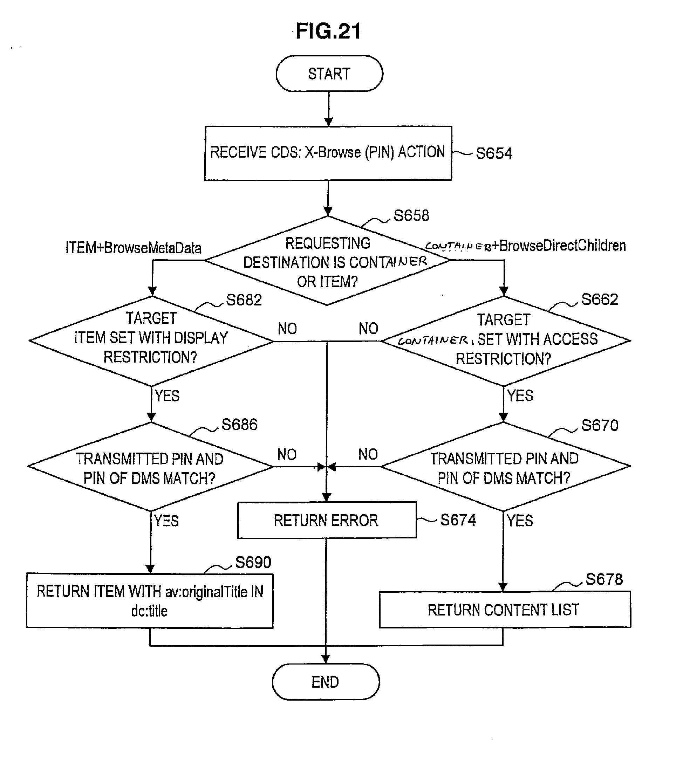

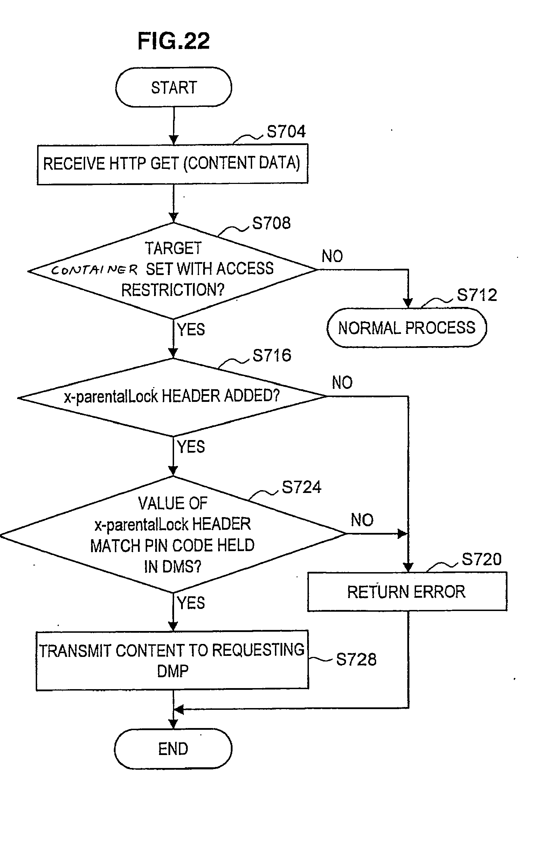

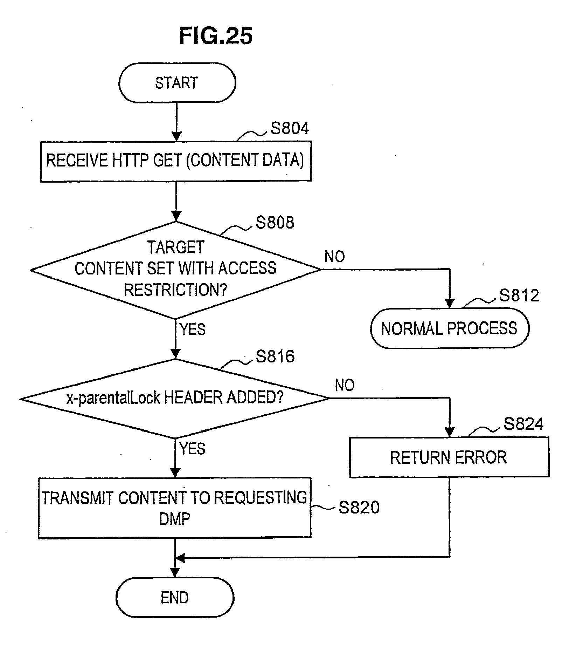

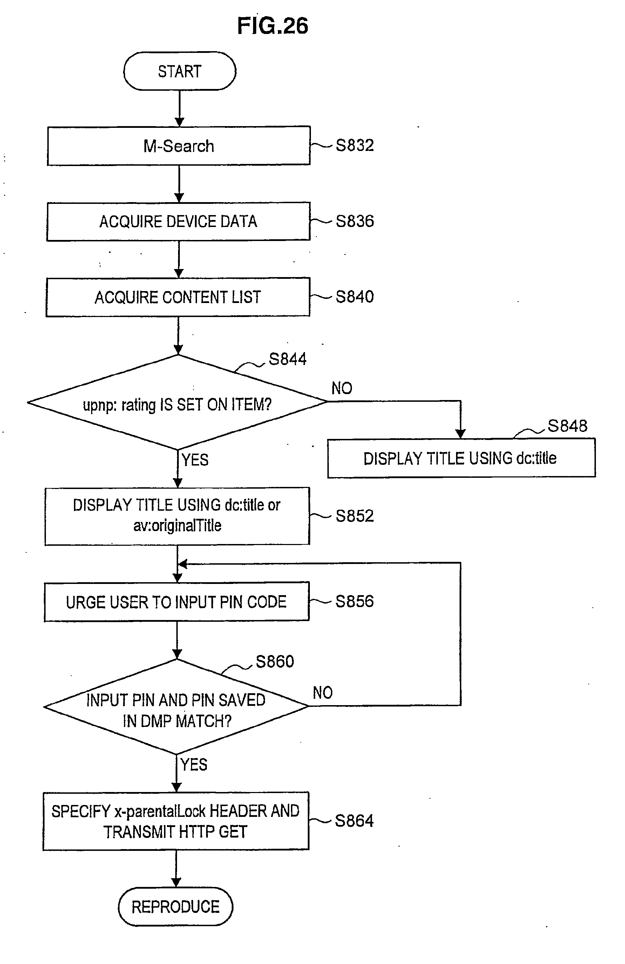

"DETAILED DESCRIPTION OF THE PREFERRED EMBODIMENTS" will be described according to the item order described below.
[1] Brief overview of home network according to present embodiment
[2] Detailed description of DMS
   [2-1] Hardware configuration of DMS
   [2-2] Function of DMS
[3] Detailed description of DMP
[4] Operation in home network
   [4-1] Generation of CDS (FIG. 15 to FIG. 19)
   [4-2] Transmission control of metadata (FIG. 20 and FIG. 21)
   [4-3] Transmission control of content data
      [4-3-1] Example of using PIN on DMS side (FIG. 22 to FIG. 24)
      [4-3-2] Example of using PIN on DMP side (FIG. 25 and FIG. 26)
[5] Conclusion

### [1] Brief overview of home network according to present embodiment

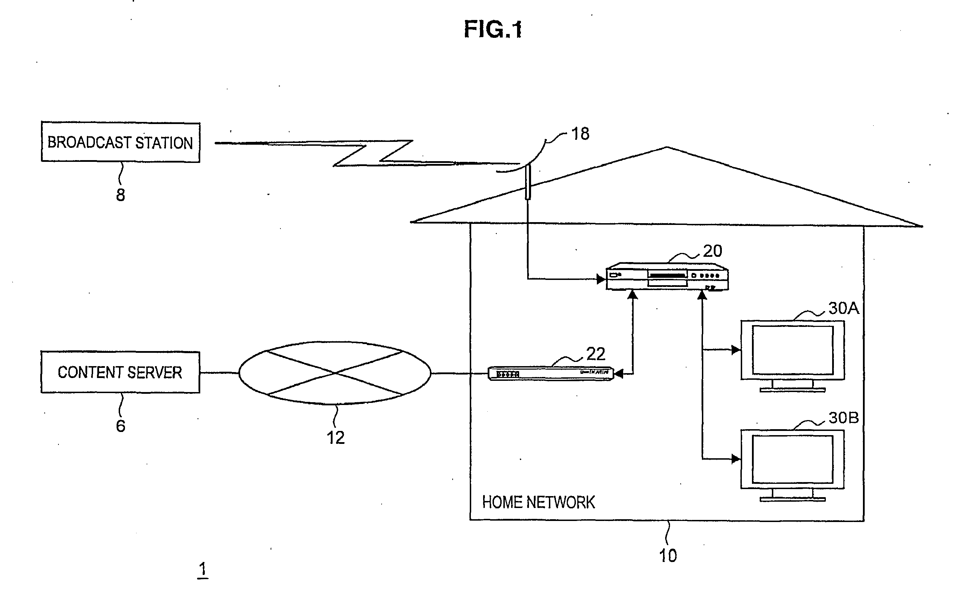

First, a home network 10 serving as one example of a data communication system according to the present embodiment will be schematically described with reference to FIG. 1.

FIG. 1 is an explanatory view showing a configuration of a content providing system 1 including the home network 10 according to the present embodiment. As shown in FIG. 1, the content providing system 1 includes a content server 6, a broadcast station 8, a communication network 12, and the home network 10.

The content server 6 is connected to the home network 10 through the communication network 12, and transmits content data and metadata to the home network. For instance, the content server 6 transmits stored metadata to the home network when a content list is requested from the home network 10. The content server 6 transmits stored specific content data to the home network when specific content data is requested from the home network 10. The content server 6 may be an IPTV server in an IP (Internet Protocol) TV service.

The content data stored in the content server 6 may be arbitrary data such as music data including music, lecture, and radio program; video data including movie, television program, video program, photo, document, picture, and graph, game; and software.

The broadcast station 8 broadcasts the content data through an arbitrary method. That is, an example where the broadcast station 8 broadcasts the content data wirelessly is shown in FIG. 1, but the broadcast station 8 may broadcast the content data by wire. For instance, the broadcast station 8 may perform an arbitrary broadcast such as terrestrial digital broadcasting, cable TV broadcasting, BS (Broadcasting Satellite) digital broadcasting, and CS (Communication Satellite) digital broadcasting.

The communication network 12 is a wired or wireless transmission path of information transmitted from a device connected to the communication network 12. For instance, the communication network 12 may include public line network such as Internet, telephone line network, and satellite communication network; or dedicated line network such as various LAN (Local Area Network) including Ethernet (Registered trademark), WAN (Wide Area Network), and IP-VPN (Internet Protocol-Virtual Private Network).

The home network 10 includes an antenna 18, a DMS 20, a router 22, and DMPs 30A and 30B. In FIG. 1, a capital letter alphabet is denoted at the back of the reference numeral as in DMP 30A and 30B to distinguish each DMP, but the DMP is collectively termed simply as DMP 30 if each DMP does not particularly need to be distinguished.

The antenna 18 receives broadcast wave of the content data transmitted from the broadcast station 8, and provides the received content data to the DMS 20. The router 22 is connected to the content server 6 through the communication network 12, and relates request from the DMS 20 and the data transmitted from the content server 6.

The DMS 20 (data communication device) stores the content data and the metadata provided through the antenna 18 and the router 22. The DMS 20 also has a function serving as the data communication device to transmit the stored content data to the DMP 30 in response to a request from the DMP 30. However, as described in "[2] Detailed description of DMS", the DMS 20 according to the present embodiment operates differently depending on whether or not the request from the DMP 30 satisfy a predetermined condition, and realizes the parental control in the DMP 30.

The DMP 30 (data requesting device) has a function serving as a data requesting device for requesting content list or content data to the DMS 20. The DMP 30 also functions as a reproduction device for reproducing the content data acquired from the DMS 20.

The DMS 20 and the DMP 30 are shown as separate configurations in FIG. 1, but the DMS 20 and the DMP 30 may be integrally configured. Furthermore, in FIG. 1, an example where the DMS 20 includes a function serving as a receiver is shown, but the DMS 20 and the receiver may have separate configurations. Furthermore, the receiver and the DMP 30 may be integrally configured or may be separately configured.

In FIG. 1, a monitor is shown as one example of the DMP 30, but the DMP 30 may be an information processing device such as PC (Personal Computer), household video processing device (DVD recorder, video cassette recorder, etc.), portable telephone, PHS (Personal Handyphone System), portable music reproduction device, portable video processing device, PDA (Personal Digital Assistants), household game machine, portable game machine, and home electronics. The detailed functions of the DMP 30 will be hereinafter described in "[3] Detailed description of DMP". Similarly, the DMS 20 may also be an arbitrary information processing device stated above.

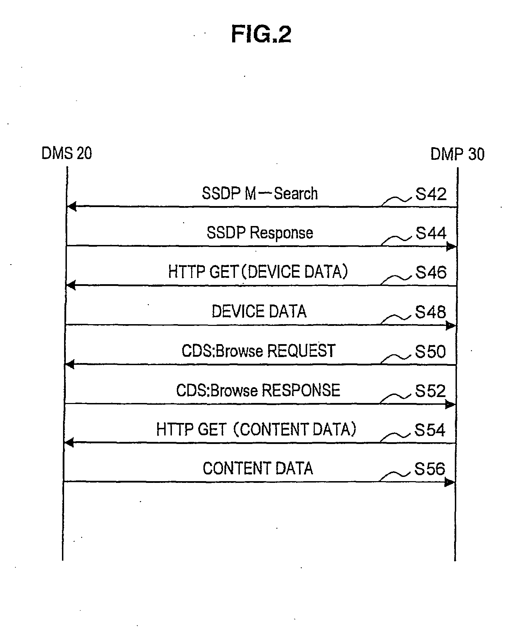

The content providing system 1 including the home network 10 according to the present embodiment has been schematically described above with reference to FIG. 1. Now, the flow of communication carried out between the DMS 20 and the DMP 30 will be described with reference to FIG. 2.

FIG. 2 is a sequence chart showing the flow of communication carried out between the DMS 20 and the DMP 30. First, the DMP 30 searches for the DMS 20 existing in the home network 10. Specifically, the DMP 30 transmits an SSDP (Simple Service Discovery Protocol) M-Search as shown in FIG. 2 to the home network 10 according to the UPnP standard (S42).

When receiving the SSDP M-Search from the DMP 30, the DMS 20 transmits an SSDP Response as shown in FIG. 2 to the DMP 30 according to the UPnP standard (S44). The DMP 30 can specify the existence of the DMS 20, the IP address of the DMS 20, and the like by receiving the relevant SSDP Response.

Thereafter, the DMP 30 requests for transmission of device data related to the device of the DMS 20 to the DMS 20. Specifically, the DMP 30 transmits HTTP(Hyper Text Transfer Protocol) GET(device data: Device Description) to the DMS 20 as shown in FIG. 2 (S46).

When receiving the HTTP GET (Device data) from the DMP 30, the DMS 20 transmits the device data to the DMP 30 as shown in FIG. 2 (S48). The device data includes arbitrary attribute information related to the DMS 20 such as manufacturing company, device name, device ID, installed function, and the like of the DMS 20.

Thereafter, the DMP 30 requests for transmission of a list of content data stored in the DMS 20 or a list of one part of the content data stored in the DMS 20 to the DMS 20. Specifically, the DMP 30 transmits a CDS (Content Directory Service): Browse request to the DMS 20 as shown in FIG. 2 (S50).

When receiving the CDS: Browse request from the DMP 30, the DMS 20 transmits a content list related to the CDS: Browse request to the DMP 30. Specifically, the DMS 20 transmits a CDS: Browse response to the DMP 30 as shown in FIG. 2 (S52). The content list may be metadata of plural content data.

Furthermore, the DMP 30 request for content data selected by the user from the content list acquired in S52 to the DMS 20. Specifically, the DMP 30 transmits the HTTP HET (content data) as shown in FIG. 2 to the DMS 20 (S54). When receiving the HTTP GET (content data) from the DMP 30, the DMS 20 searches for the content data related to the HTTP GET (content data) from the stored content data, and transmits the same to the DMP 30. The DMP 30 can acquire the content data from the DMS 20 and reproduce the content data through the series of flow described above.

### (Background to present embodiment)

The DMS 20 can describe a rating indicating that the relevant content data should viewing restricted on the metadata of the content data containing violence and sexual scene. In the UPnP standard and the DLNA guideline, the parental control in the DMP 30 is not particularly defined.

Suppose the function related to parental control is mounted on the DMP 30, the DMP 30 may restrict the reproduction of the content data set with the rating by the DMS 20. However, if the function related to parental control is not mounted on the DMP 30, the title of the content data may be displayed or the content data may be reproduced in the DMP 30 even if the DMS 20 sets the rating to the content data.

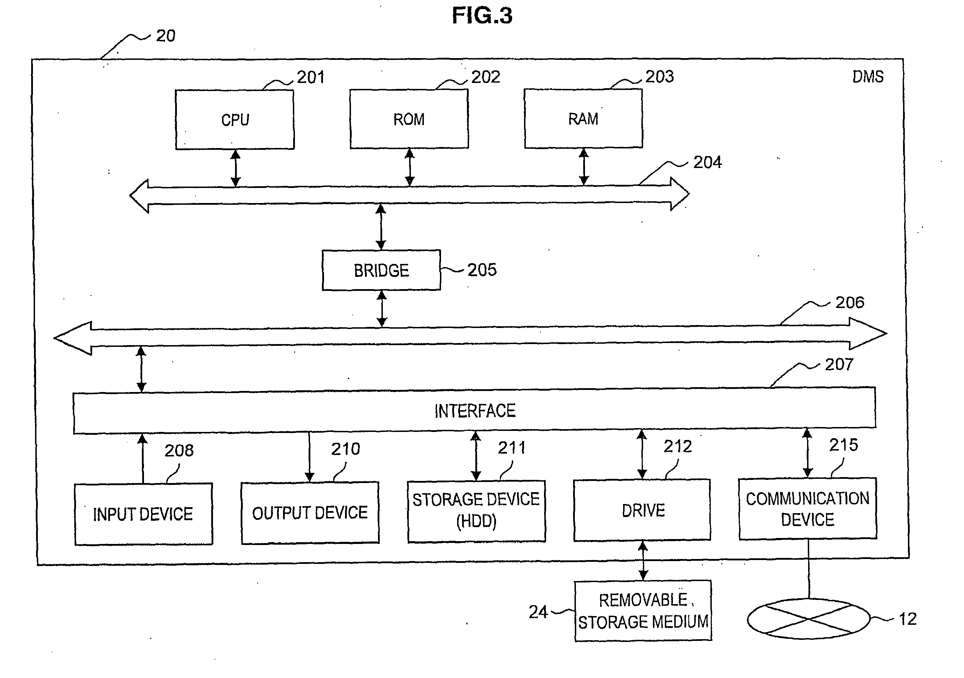

The DMS 20 according to the present embodiment has been contrived focusing on such aspect. According to the DMS 20 of the present embodiment, the display at the DMP 30 of the data related to the content data set with the rating can be restricted regardless or whether or not the DMP 30 corresponds to parental control. The DMS 20 according to the present embodiment will be described in detail below with reference to FIGS. 3 to 8.

### [2] Detailed description of DMS

### [2-1] Hardware configuration of DMS

FIG. 3 is an explanatory view showing a hardware configuration of the DMS 20 according to the present embodiment. The DMS 20 includes a CPU (Central Processing Unit) 201, a ROM (Read Only Memory) 202, a RAM (Random Access Memory) 203, a host bus 204, a bridge 205, an external bus 206, an interface 207, an input device 208, an output device 210, a storage device (HDD) 211, a drive 212, and a communication device 215.

The CPU 201 functions as a calculation processing device and a control device, and controls the overall operation of the DMS 20 according to various programs. The CPU 201 may be a microprocessor. The ROM 202 stores programs, calculation parameters, or the like used by the CPU 201. The RAM 203 primary stores programs used in the execution of the CPU 201, parameters that appropriately change in the execution, or the like. These components are mutually connected by the host bus 204 configured to include a CPU bus, or the like.

The host bus 204 is connected to the external bus 206 such as PCI (Peripheral Component Interconnect/Interface) bus through the bridge 205. The host bus 204, the bridge 205, and the external bus 206 may not be separately configured, and the respective functions may be provided to one bus.

The input device 208 is configured to have an input unit for a user to input information such as mouse, keyboard, touch panel, button, microphone, switch, and lever; an input control circuit for generating an input signal based on the input by the user, and outputting the signal to the CPU 201; and the like. The user of the DMS 20 operates the input device 208 to input various data or instruct the processing operation to the DMS 20.

The output device 210 is configured to have a display device such as CRT (Cathode Ray Tube) display device, liquid crystal display (LCD) device, OLED (Organic Light Emitting Display) device, and lamp; and an audio output device such as speaker and headphone. The output device 210 outputs the reproduced content. Specifically, the display device displays various information such as reproduced video data in text or in image. The audio output device converts the reproduced audio data to audio, and outputs the audio.

The storage device 211 is a device for storing data configured as one example of a storage unit of the DMS 20 according to the present embodiment. The storage device 211 may include a storage medium, a recording device for recording data on the storage medium, a readout device for reading out data from the storage medium, and a deleting device for deleting data recorded on the storage medium. The storage device 211 includes HDD (Hard Disk Drive), or the like. The storage device 211 drives the hard disc, and stores programs to be executed by the CPU 201, and various data. The storage device 211 is also recorded with content data, metadata, device data, and the like.

The drive 212 is a storage medium reader/writer, and is incorporated in or is externally attached to the DMS 20. The drive 212 reads out information recorded on a removable storage medium 24 such as magnetic disc, optical disc, magnetic optical disc, or semiconductor memory that is loaded, and outputs the information to the RAM 203.

The communication device 215 is a communication interface configured to include a communication device and the like for connecting to a communication network 12. The communication device 215 may be a wireless LAN (Local Area Network) correspondence communication device, a wireless USB correspondence communication device, or a wired communication device that performs communication by wire. The communication device 215 transmits and receives various data such as content data and metadata with the content server 6 through the communication network 12.

The hardware configuration of the DMS 20 has been described above with reference to FIG. 3, where the hardware of the DMP 30 is configured substantially the same as the DMS 20, and thus the description will be omitted.

### [2-2] Function of DMS

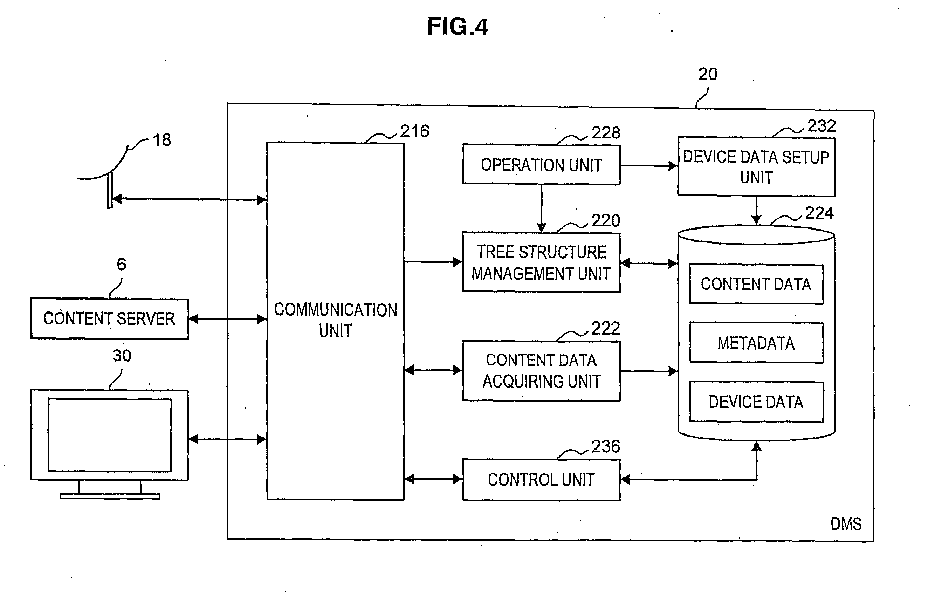

The hardware configuration of the DMS 20 according to the present embodiment has been described above with reference to FIG. 3. Now, the function of the DMS 20 according to the present embodiment will be described with reference to FIGS. 4 to 8.

FIG. 4 is a function block diagram showing the configuration of the DMS 20 according to the present embodiment. As shown in FIG. 4, the DMS 20 includes a communication unit 216, a tree structure management unit 220, a content data acquiring unit 222, a storage unit 224, an operation unit 228, a device data setup unit 232, and a control unit 236.

The communication unit 216 is a wired or wireless interface with other devices and external devices in the home network 10, and function as a reception unit for receiving various data from other devices and a transmission unit for transmitting various data to the other devices. For instance, the communication unit 216 receives content data from the content server 6, or transmits content data to the DMP 30.
The communication unit 216 may have a wireless communication function defined by IEEE (Institute of Electrical and Electronic Engineers)802.11a, b, g, and the like; or may have a MIMO (Multiple Input Multiple Output) communication function defined in IEEE802.11n. Furthermore, the communication unit 216 may have a communication function corresponding to the wired LAN defined in IEEE 802.3.

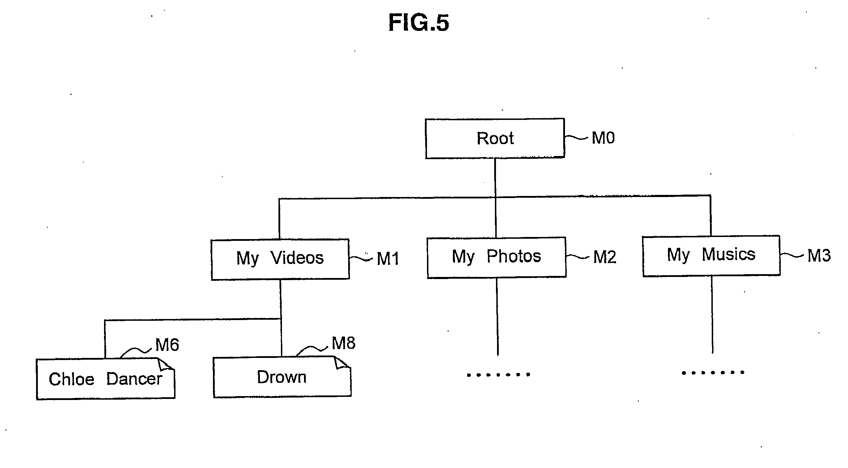

The tree structure management unit 220 tree structures (hierarchical structures) the metadata of the content data received by the communication unit 216, and records the same in the storage unit 224. The tree structure management unit 220 manages update, correction, or the like of the tree structure of the metadata recorded in the storage unit 224. The tree structure of the metadata managed by the tree structure management unit 220 will be described below with reference to FIGS. 5 to 7.

FIG. 5 is an explanatory view schematically showing the tree structure of the metadata. As shown in FIG. 5, one metadata is arranged in the first hierarchy, a plurality of metadata is arranged at the lower order of the metadata of the first hierarchy (second hierarchy); and a plurality of metadata is further arranged at the lower order of each metadata of the second hierarchy (third hierarchy).

Specifically, the metadata M0 with the title "Root" is arranged in the first hierarchy. The metadata M1 with the title "My Videos", the metadata M2 with the title "My Photos", and the metadata M3 with the title "My Musics" are arranged at the lower order of the metadata M0. Furthermore, the metadata M1, the metadata M2, and the metadata M3 have metadata in the lower order. The metadata having metadata in lower order is sometimes referred to as container in the present specification.

For instance, the metadata M6 with the title "Chloe Dancer" and the metadata M8 with the title "Drown" are arranged at the lower order of the metadata M1 with the title "My Videos". The metadata M6 and the metadata M8 are the metadata of the content data. Such metadata of the content data are sometimes referred to as item in the present specification. The metadata M2 and the metadata M3 also have items in the lower order, but are omitted for the sake of clarifying the drawing in FIG. 5.

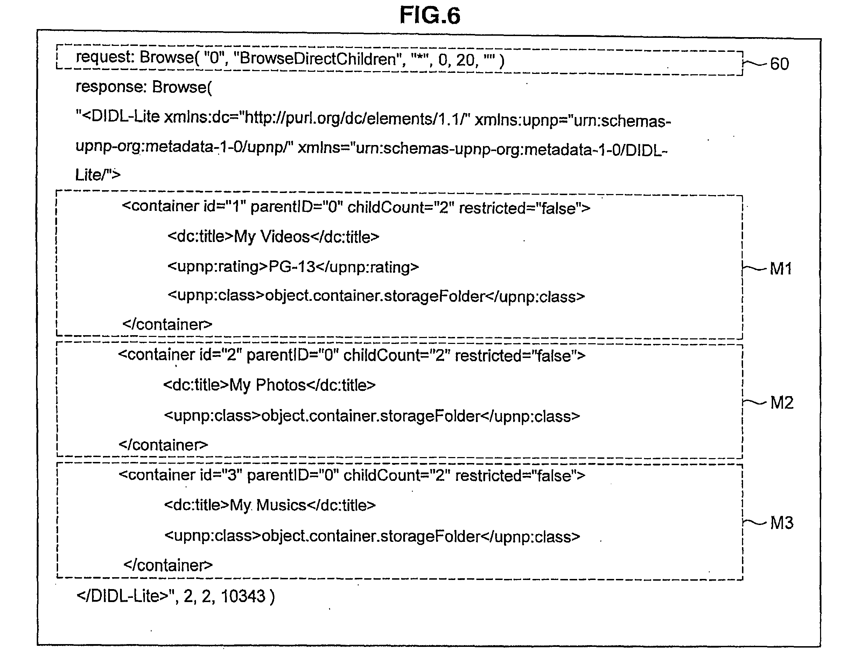

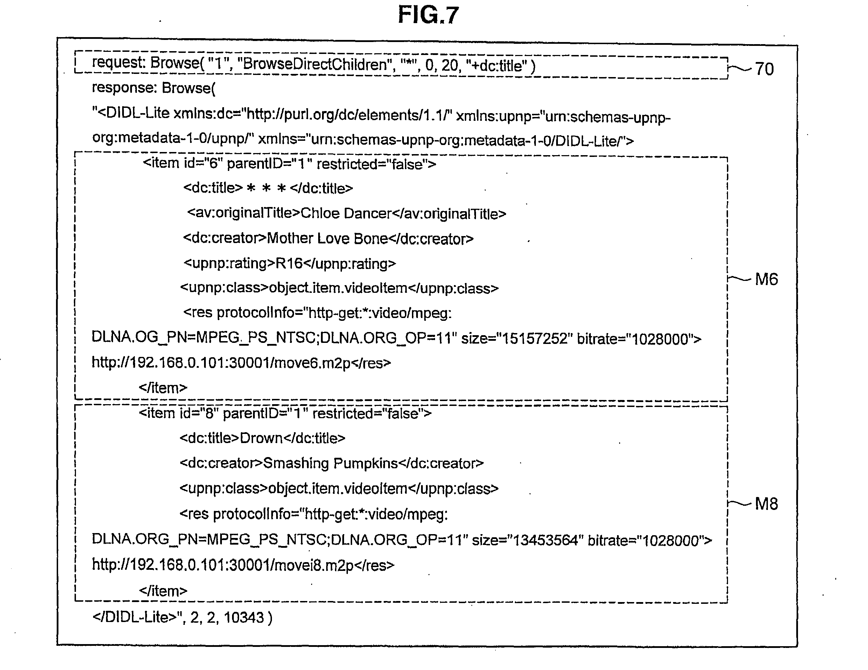

A more detailed configuration of each metadata will now be described with reference to FIGS. 6 and 7. The description will be made with the numbers denoted to each metadata in FIG. 5 as the ID for identifying each metadata for the sake of convenience of the explanation.

FIG. 6 is an explanatory view showing a configuration of the metadata corresponding to a container.

The "container id="1"" contained in the metadata M1 indicates that the ID of the metadata M1 is "1", and "parent ID="0"" indicates that the metadata M1 is arranged at the lower order of the metadata M0. The "childCount="2"" indicates that two metadata are arranged at the lower order of the metadata M1.

The "<dc:title>My Videos</dc:title>" contained in the metadata M1 indicates that the title of the metadata M1 is "My Videos".

Furthermore, "<upnp:rating>PG-13</upnp:rating>" contained in the metadata M1 indicates that viewing restriction "PG-13" is set to the content data corresponding to the metadata arranged at the lower order of the metadata M1.
The "PG-13" is sometimes referred to as rating, and other rating includes R14, R16, R18, and R20.

Similarly, the metadata M2 indicates that the ID of the metadata M2 is "2", the metadata M2 is arranged at the lower order of the metadata M0, and two metadata are arranged at the lower order of the metadata M2. Furthermore, rating is not set to the metadata M2.

The metadata M3 indicates that the ID of the metadata M3 is "3", the metadata M3 is arranged at the lower order of the metadata M0, and two metadata are arranged at the lower order of the metadata M2. Furthermore, rating is not set to the metadata M3.

The metadata shown in FIG. 6 is transmitted from the DMS 20 to the DMP 30 in response to the CDS: Browse request 60 from the DMP 30. The ""0" "BrowseDirectChildren"" contained in the CDS: Browse request 60 indicates that the metadata arranged at the lower order of the metadata M0, which ID is 0, is the requesting target.

FIG. 7 is an explanatory view showing a configuration of the metadata corresponding to an item.

The "item id="6"" contained in the metadata M6 indicates that the ID of the metadata M6 is "6", and the "parentID="1"" indicates that the metadata M6 is arranged at the lower order of the metadata M1.

Furthermore, the tree structure management unit 220 sets, as necessary, a character string different from the true title of the content data for the title of the content data such as "<dc:title>***</dc:title>". For instance, when specification is made by the user, when the rating is set on the metadata, when the relevant metadata is arranged at the lower order of the container set with the rating, and the like, the tree structure management unit 220 may set such character string for the title.

The tree structure management unit 220 may have "<dc:title>" of the "<dc:title>***</dc:title>" as "<dc:title av:hidden="true">". A specific DMP 30 can reference the "<dc:title av:hidden="true">" to recognize that the true title of the content data is hidden.

When setting the character string for the title of the content data as described above, the tree structure management unit 220 sets the true title of the content data as predetermined data. In the example shown in FIG. 7, the tree structure management unit 220 sets "Chloe Dancer", which is the true title of the content data, to the item of
"<av:originalTitle>".

The "<upnp:rating>R16</upnp:rating>" contained in the metadata M6 indicates that the viewing restriction "R16" is set to the content data corresponding to the metadata M6. In addition, information indicating the attribute and the whereabouts of the content data "Chloe Dancer" are contained in the metadata M6.

Similarly, the "item id="8"" contained in the metadata M8 indicates that the ID of the metadata M8 is "8", and the "parentID="1"" indicates that the metadata M8 is arranged at the lower order of the metadata M1.

The "<dc:title>Drown</dc:title>" contained in the metadata M8 indicates that the title of the content data corresponding to the metadata M8 is "Drown". Since the true title of the content data is set in the "<dc:title>" of the metadata M8, the tree structure management unit 220 does not particularly perform the setting of the item "<av:originalTitle>". In addition, information indicating the attribute and the whereabouts of the content data "Drown" are contained in the metadata M8.

The metadata shown in FIG. 7 is transmitted from the DMS 20 to the DMP 30 in response to the CDS: Browse request 60 from the DMP 30. The ""1""BrowseDirectChildren"" contained in the CDS: Browse request 60 indicates that the metadata arranged at the lower order of the metadata M1, which ID is 1, is the requesting target. Furthermore, the DMS 20 may not transmit to the DMP 30 the "<av:originalTitle>Chloe Dancer</av:originalTitle>" set as the predetermined data unless a particular request is made.

Here, returning to the description of the configuration of the DMS 20 with reference to FIG. 4, the content data acquiring unit 222 acquires the content data and records the same in the storage unit 224. For instance, the content data acquiring unit 222 may request the content server 6 for the transmission of the content data selected by the user, and acquire the content data transmitted in response to the request. The content data acquiring unit 222 may acquire specific content data from the content received by the antenna 18, and record the same in the storage unit 224.

The storage unit 224 is a storage medium recorded with various data. The various data includes content data, metadata described with reference to FIGS. 5 to 7, device data of the DMS 20, authentication data (PIN), and the like. The storage unit 224 may be a storage medium including a non-volatile memory such as EEPROM (Electrically Erasable Programmable Read-Only Memory) and EPROM(Erasable Programmable Read Only Memory); a magnetic disc such as hard disc and disc-shaped magnetic body disc; an optical disc such as CD-R(Compact Disc Recordable)/RW(ReWritable), DVD-R (Digital Versatile Disc Recordable)/RW/+R/+RW/RAM (Random Access Memory), and BD (Blu-Ray Disc (registered trademark))-R/BD-RE; or an MO (Magneto Optical) disc.

The operation unit 228 is an interface with the user of the DMS 20. The operation unit 228 is configured to include an operation unit including touch panel, button, switch, lever, dial, light receiving section for infrared light signal generated by a remote controller or a receiving section of a wireless signal; an input control circuit for generating an operation signal according to the operation from the user on the operation unit and outputting the operation signal; and the like. The user of the DMS 20 operates the operation unit 228 to input various data or instruct various processes on the DMS 20. For instance, the user can input rating of the content data, or whether or not to hide the title through the operation unit 228.

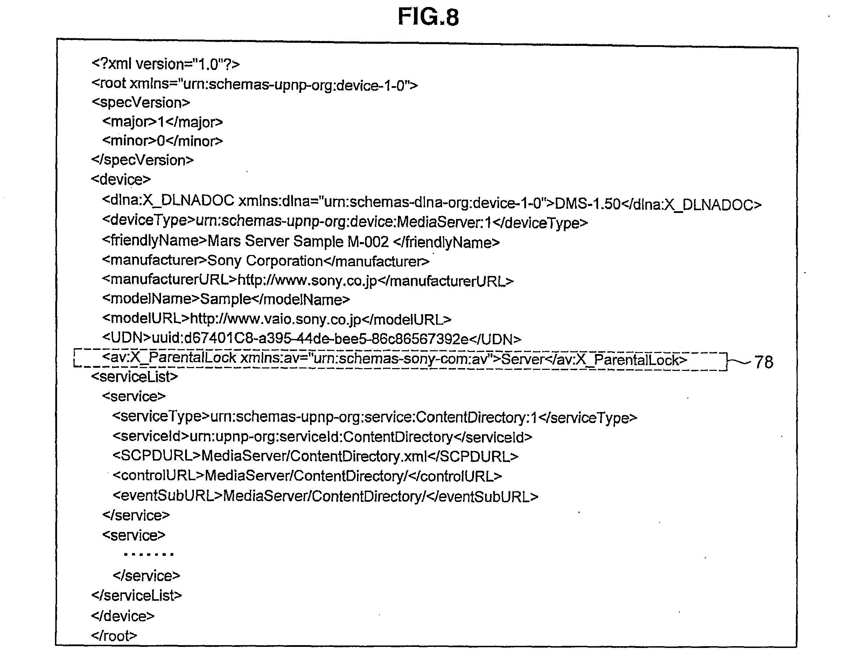

The device data setup unit 232, for example, sets the device data input by the user through the operation unit 228. The device data includes information related to the PIN (Personal Identification Number) desired when viewing the rated content data on the DMP 30 or displaying the title. A specific example of such device data is shown in FIG. 8.

FIG. 8 is an explanatory view showing a specific example of the device data. The device data contains various data such as device type, name of manufacturing company, manufacturing company URL (Uniform Resource Locator), and UUID (Universally Unique Identifier).

The device data shown in FIG. 8 has "Server" described in the item "<av:X_ParentalLock xmlns:av="urn:schemas-sony-com:av">" for the used PIN information 78. This indicates the setting that the PIN code of the DMS 20 is desired when viewing the content data set with the rating in the DMP 30 or when displaying the title. Suppose "Client" is described for the used PIN information 78, the PIN code of the DMP 30 is desired when viewing the content data set with the rating in the DMP 30 or when displaying the title. The relevant used PIN information 78 may be set based on the information input through the operation unit 228 by the user.

Returning to the description of the configuration of the DMS 20 with reference to FIG. 4, the control unit 236 controls the transmission of various data recorded on the storage unit 224 to the DMP 30. For instance, the control unit 236 transmits the content data set with the rating to the DMP 30 when the PIN of the DMS 20 or the DMP 30 is input at the DMP 30. The control unit 236 may transmit the true title of the content data set with the rating to the DMP 30 when the PIN of the DMS 20 or the DMP 30 is input at the DMP 30.

The control unit 236 may transmit the character string set as "<dc:title>" when the CDS: Browse request received from the DMP 30 is not the request based on the input of the PIN of the DMS 20 or the DMP 30. The control unit 236 may describe the true title set as "<av:originalTitle>" in the "<dc:title>" and transmit the same when the CDS: Browse request is the request based on the input of the PIN. In such configuration, if the DMP 30 does not have the parental control function which requests for the PIN input, the DMP 30 recognizes the character string set as the "<dc:title>" as the title of the content data, and displays the same. If the DMP 30 has the parental control function which requests for the PIN input, the DMP 30 may display the true title of the content data.

The control unit 236 may transmit the metadata of lower order when the CDS: Browse request with respect to the metadata of the lower order of the metadata set with the rating exists, and the CDS: Browse request is the request based on the PIN input. The control unit 236 may not transmit the metadata of the lower order when the CDS: Browse request with respect to the metadata of the lower order of the metadata set with the rating exists, and the CDS: Browse request is not the request based on the PIN input. In such configuration, if the DMP 30 does not have the parental control function which requests for the PIN input, the DMP 30 recognizes that the metadata is not arranged at the lower order of the metadata set with the rating. If the DMP 30 has the parental control function which requests for the PIN input, the DMP 30 may display the information related to the metadata at the lower order.

An example where user authentication is performed using the PIN code is described in the present embodiment, but the method of the user authentication is not limited to such example. For instance, the user authentication may be performed using a password. Furthermore, the user authentication may be a fingerprint authentication method of requesting input of the fingerprint to the user, and performing the authentication based on whether or not the input fingerprint matches or resembles the fingerprint stored in the storage unit 224. The user authentication may be a medium authentication method of requesting proximity operation of the IC card to the user, and performing the authentication based on whether or not the proximal IC card matches the IC card information stored in the storage unit 224. In addition, the user authentication may be a voice authentication method using the voice of the user, a retina authentication method based on the pattern of the retina of the user, a face authentication method based on the shape of the face of the user, or the like.

More detailed functions of the control unit 236 will be described in "[4] Operation in home network".

### [3] Detailed description of DMP

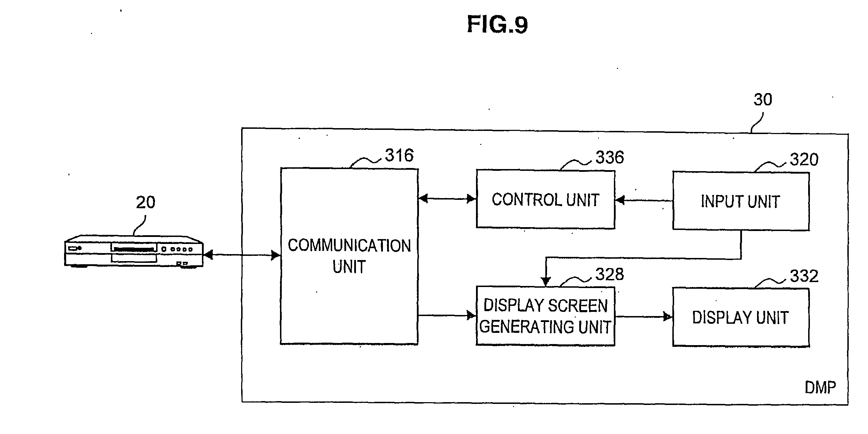

The DMS 20 according to the present embodiment has been described with reference to FIGS. 4 to 8. Now, the DMP 30 communicable with the DMS 20 will be described with reference to FIGS. 9 to 14. The following description will be made below focusing on a case where the DMP 30 has the parental control function.

FIG. 9 is a function block diagram showing a configuration of the DMP 30. As shown in FIG. 9, the DMP 30 includes a communication unit 316, an input unit 320, a display screen generating unit 328, a display unit 332, and a control unit 336.

The communication unit 316 is a wired or wireless interface with the DMS 20, and function as a reception unit for receiving various data from the DMS 20 and a transmission unit for transmitting various requests to the DMS 20. For instance, the communication unit 316 may have a wireless communication function defined by IEEE 802.11a, b, g, and the like; or may have a MIMO communication function defined in IEEE802.11n, similar to the communication unit 216 of the DMS 20. Furthermore, the communication unit 316 may have a communication function corresponding to the wired LAN defined in IEEE802.3.

The input unit 320 is an interface with the user of the DMP 30. The input unit 320 includes an operation unit including touch panel, button, switch, lever, dial, light receiving section for infrared light signal generated by a remote controller or a receiving section of a wireless signal. The input unit 320 is also configured from an input control circuit for generating an operation signal according to the operation from the user on the operation unit and outputting the operation signal, and the like. The user of the DMP 30 operates the input unit 320 to input various data or instruct various processes on the DMP 30. For instance, the user can request for the content list, input the PIN code of the DMS 20 or the DMP 30, or request for the content data through the input unit 320.

The display screen generating unit 328 generates various display screens based on the data acquired from the DMS 20, and displays the same on the display unit 332. For instance, the display screen generating unit 328 generates a content list screen based on the content list acquired from the DMS 20, or generates a reproduction screen by decoding the content data acquired from the DMS 20. The format data of the content data includes, for example, an image compression format such as JPEG(Joint Photographic coding Experts Group), MPEG(Moving Picture Experts Group)1, MPEG2, or MPEG4; and an audio compression format such as MP3 (MPEG1 Audio Layer-3), AAC (Advanced Audio Coding), LPCM (Linear PCM), WMA9 (Windows (registered trademark) Media Audio9), ATRAC (Adaptive TRansform Acoustic Coding), or ATRAC3.

The display unit 332 displays various display screens generated by the display screen generating unit 328. The display unit 332 may be a CRT display device, a liquid crystal display device, or an OLED device.

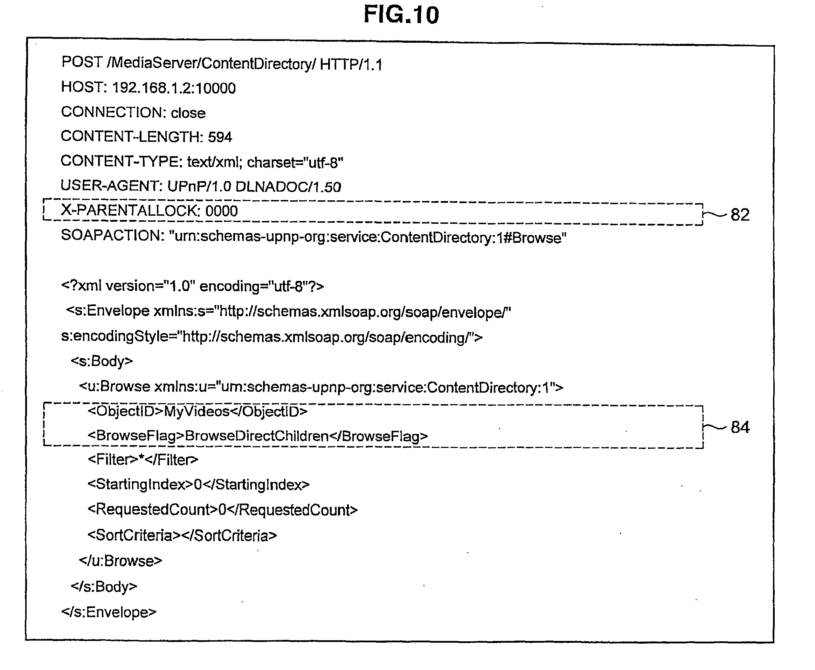

The control unit 336 generates various request based on the input by the user to the input unit 320, and transmits the generated request to the DMS 20. For example, the control unit 336 generates the CDS: Browse request when the content list is requested by the user, and transmits the CDS: Browse request to the DMS 20. In this case, the control unit 336 generates the CDS: Browse request reflecting the input of the relevant PIN code when input of the PIN code of the DMS 20 or the DMP 30 is made by the user. A specific example of the CDS: Browse request generated by the control unit 336 is shown in FIG. 10.

FIG. 10 is an explanatory view showing a specific example of the CDS: Browse request. As shown in FIG. 10, the CDS: Browse request includes a description 84 specifying the metadata of the requesting target. For instance, the description shown in FIG. 10 indicates that the metadata arranged at the lower order of the "My Videos" is the requesting target. The control unit 336 also adds "X-PARENTALLOCK" (description 82) to the header of the CDS: Browse request when the input of the PIN code of the DMS 20 or the DMP 30 is made by the user.

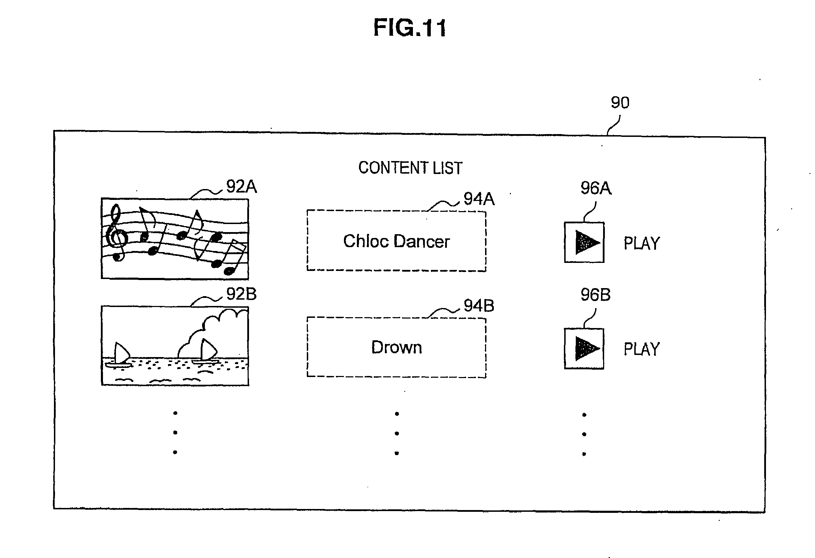

The DMS 20 receiving such CDS: Browse request transmits the metadata M6 and M7 shown in FIG. 7 to the DMP 30. Here, "Chloe Dancer", which is the true title, is assumed to be described in the "<dc:title>" of the metadata M6 transmitted from the DMS 20. In this case, the display screen generating unit 328 generates a content list screen 90 shown in FIG. 11, and displays the same on the display unit 332.

FIG. 11 is an explanatory view showing one example of a content list screen 90. As shown in FIG. 11, the content list screen 90 includes thumbnails 92A and 92B, titles 94A and 94B, and play buttons 96A and 96B corresponding to each content data. The user selects the play button 96A or 96B contained in the relevant content list screen 90 to request for transmission of the content data to the DMS 20.

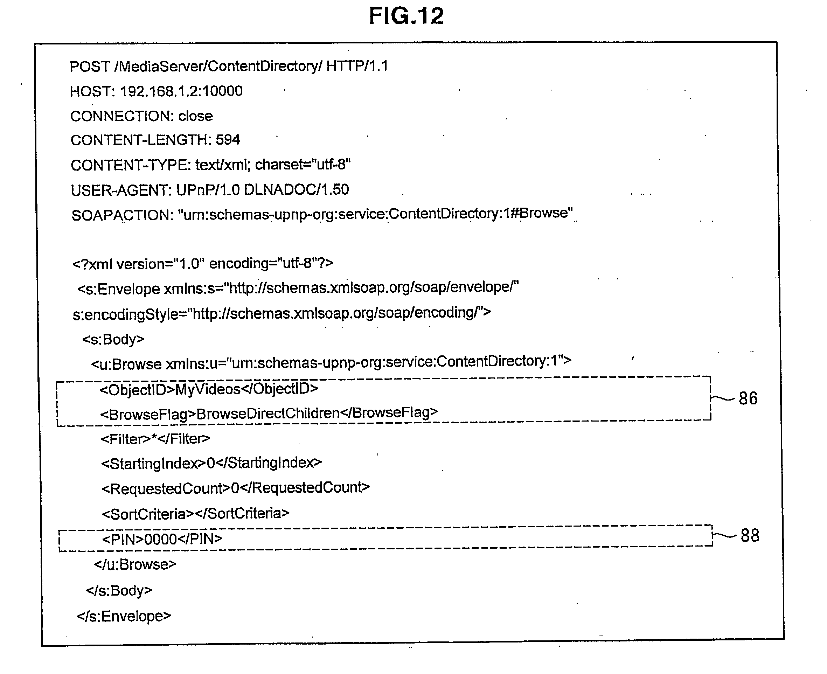

In the above description, an example where the control unit 336 adds "X-PARENTALLOCK" to the header of the CDS: Browse request when the input of the PIN code of the DMS 20 or the DMP 30 is made by the user has been described, but the present embodiment is not limited to such example. For instance, the control unit 336 may include the PIN code in the Body portion of the CDS: Browse request, as shown in FIG. 12, when the input of the PIN code of the DMS 20 or the DMP 30 is made by the user. In the present embodiment, the relevant CDS: Browse request is referred to as CDS: X-Browse request.

FIG. 12 is an explanatory view showing a specific example of the CDS: X-Browse request. As shown in FIG. 12, the CDS: X-Browse request includes a description 86 specifying the metadata of the requesting target. For instance, the description shown in FIG. 12 indicates that the metadata arranged at the lower order of the "My Videos" is the requesting target. Furthermore, the control unit 336 may generate the CDS: X-Browse request including the "<PIN>0000<PIN>" (description 88) when the input of the PIN code of the DMS 20 or the DMP 30 is made by the user.

In the above description, an example where the "Chloe Dancer", which is the true title, is described in the "<dc:title>" of the metadata M6 transmitted from the DMS 20 has been described, but the present embodiment is not limited to such example, as hereinafter described.

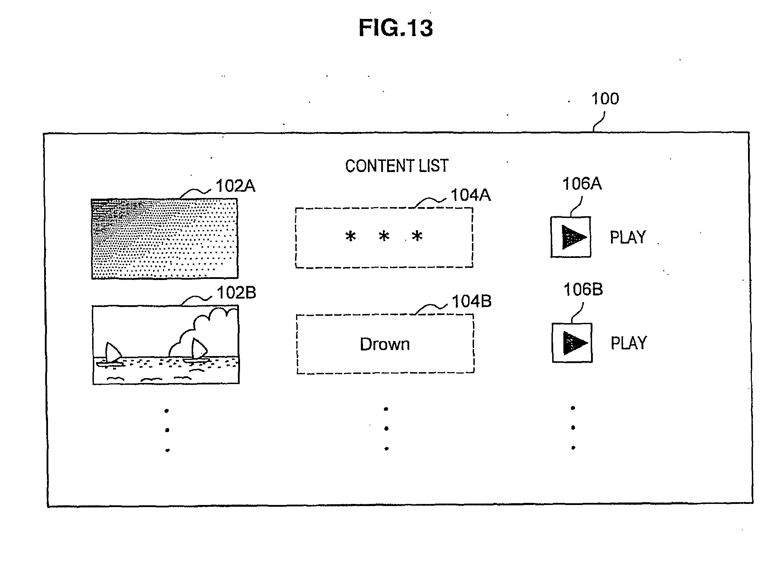

The DMS 20 transmits the metadata such that the.true title is not displayed at the DMP 30 when the "X-PARENTALLOCK" is not added to the CDS: Browse request, or when the CDS: X-Browse request is not received. For instance, the DMS 20 transmits the metadata M6 with "***" described as the "<dc:title>" to the DMP 30. In this case, the DMP 30 displays the content list screen shown in FIG. 13.

FIG. 13 is an explanatory view showing another example of a content list screen 100. As shown in FIG. 13, a character string 104A of "***" different from the true title is displayed on the content list screen 100, and a thumbnail different from the original thumbnail is also displayed.

Since the DMP not corresponding to parental control may not transmit the CDS: Browse request added with the "X-PARENTALLOCK" and the CDS: X-Browse request, the true title and thumbnail may not be displayed as shown in FIG. 13. In other words, according to the present embodiment, the display of information such as title and thumbnail of the content data can be limited in the DMP not corresponding to the parental control.

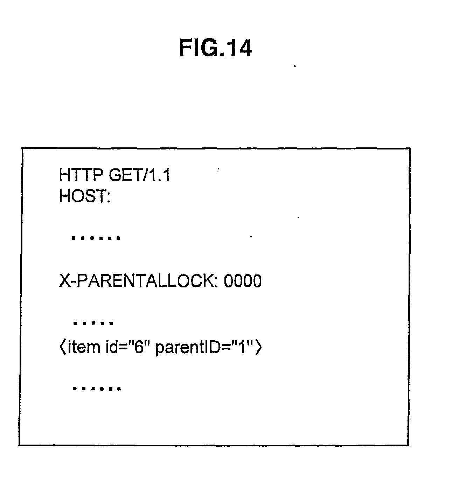

When the content data is selected by the user in the content list screen, the control unit 336 generates HTTP GET (content data) requesting for the transmission of the selected content data, and transmits the same to the DMS 20. In this case, when the input of the PIN code of the DMS 20 or the DMP 30 is made by the user, the control unit 336 generates HTTP GET (content data) reflecting the input of the relevant PIN code. A specific example of the HTTP GET (content data) generated by the control unit 336 is shown in FIG. 14.

FIG. 14 is an explanatory view showing a specific example of the HTTP GET (content data). As shown in FIG. 14, the description "item id="6"" indicating the content data to be requested is included in the HTTP GET (content data). Furthermore, the control unit 336 adds the "X-PARENTALLOCK" to the header portion of the HTTP GET (content data) when the input of the PIN code of the DMS 20 or the DMP 30 is made by the user. The control unit 336 simply adds the "X-PARENTALLOCK" when the PIN code on the DMP 30 side is used, and describes the value input by the input for the value of the "X-PARENTALLOCK" when the PIN code on the DMS 20 side is used.

When receiving the HTTP GET (content data) specifying the content data set with the rating, the DMS 20 transmits to the DMP 30 the corresponding content data if the "X-PARENTALLOCK" is contained. If the "X-PARENTALLOCK" is not contained, the DMS 20 transmits an error message (e.g., error code 503) to the DMP 30.

Since the DMP not corresponding to parental control may not transmit the HTTP GET (content data) added with the "X-PARENTALLOCK", the content data set with the rating may not be acquired from the DMS 20. That is, according to the present embodiment, the reproduction of the content data in the DMP not corresponding to parental control can be limited.

### [4] Operation in home network

The DMP 30 according to the present embodiment has been described above with reference to FIGS. 9 to 14. The operation of the home network 10 according to the present embodiment will now be described with reference to FIGS. 15 to 26.

### [4-1] Generation of CDS (FIGS. 15 to 19)

First, the setup operation of the device data and the container executed in the DMS 20 will be described with reference to FIG. 15.

FIG. 15 is a flowchart showing a flow of the setup operation of the device data and the container executed in the DMS 20. As shown in FIG. 15, the device data setup unit 232 first determines whether or not to use the PIN code of the DMS 20 to view the content data set with the rating in the DMP 30 (S404). For instance, the device data setup unit 232 may determine whether or not to use the PIN code of the DMS 20 based on user input.

If the PIN code of the DMS 20 is not used, the device data setup unit 232 sets Client to the "<av:X_ParentalLock xmlns:av="urn:schemas-sony-com:av">" of the device data (S408). If the PIN code of the DMS 20 is used, the device data setup unit 232 sets Server to the "<av:X_ParentalLock xmlns:av="urn:schemas-sony-com:av">" of the device data (S412).

The tree structure management unit 220 determines whether or not to set an access restriction on each container contained in the tree structure, and describes "upnp:rating" to the content to be set with the access restriction. To which container to set the access restriction may be selected by the user.

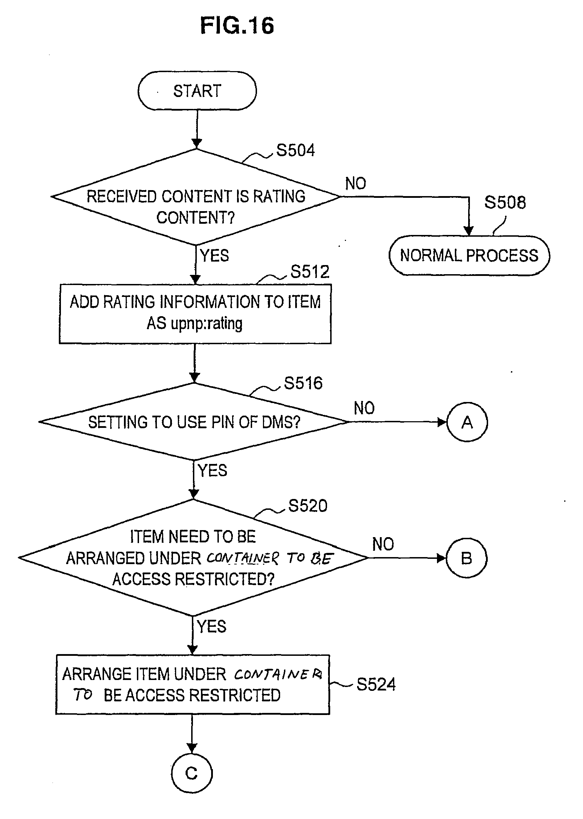

The flow in which the setup of the metadata is performed by the tree structure management unit 220 will be described with reference to FIGS. 16 to 19.

FIGS. 16 to 19 are flowcharts showing the flow in which the setup of the metadata is performed by the tree structure management unit 220. First, the tree structure management unit 220 determines whether or not the content data received by the communication unit 216 is the rating content (S504). The tree structure management unit 220 proceeds to a normal process if determined that the content data received by the communication unit 216 is not the rating content (S508).

If determined that the content data received by the communication unit 216 is the rating content, the tree structure management unit 220 adds "upnp:rating" to the item, which is the metadata of the content data (S512). Here, the tree structure management unit 220 may add "upnp:rating" based on the EIT (Event Information Table) contained in the TS stream of the MPEG-2, or the like.

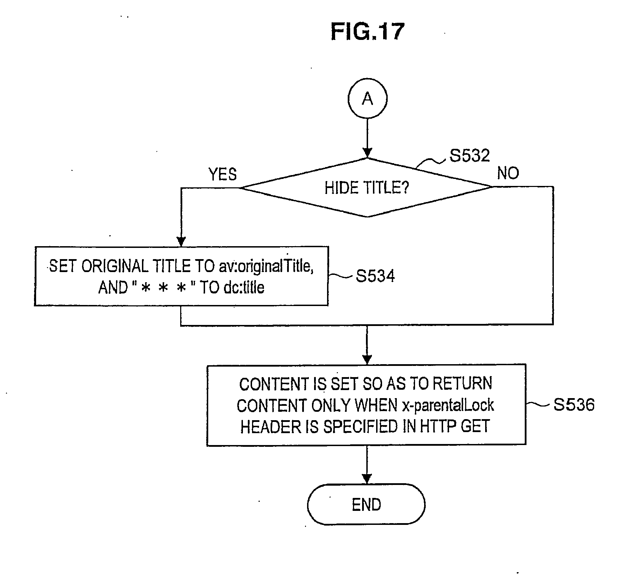

Subsequently, the tree structure management unit 220 references the device data recorded in the storage unit 224, and checks whether or not the setting is to use the PIN code of the DMS 20 (S516). The tree structure management unit 220 proceeds to the process shown in FIG. 17 if the setting is not to use the PIN code of the DMS 20. The tree structure management unit 220 arranges the relevant item at the lower order of the container set with the access restriction (rating) as necessary when the setting is to use the PIN code of the DMS 20 (S520, S524).

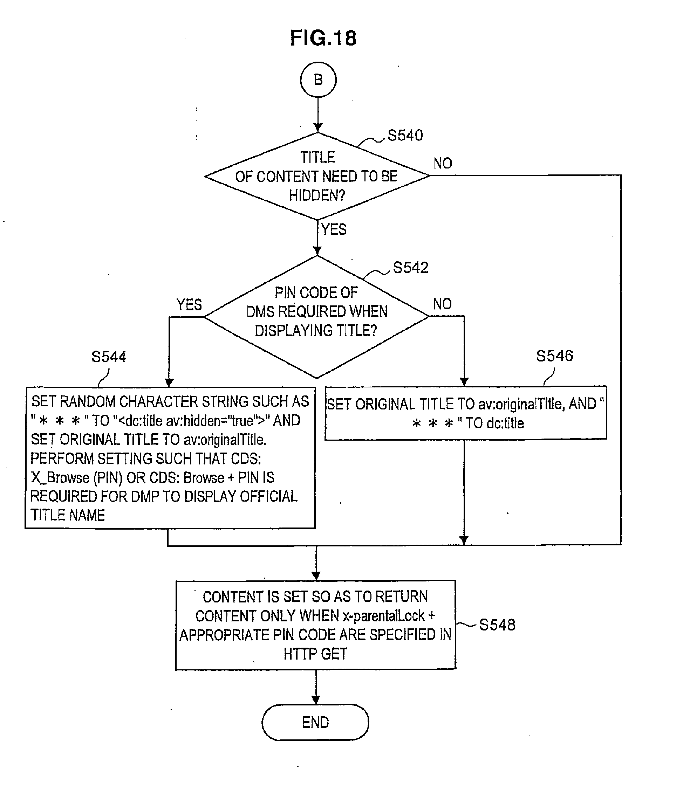

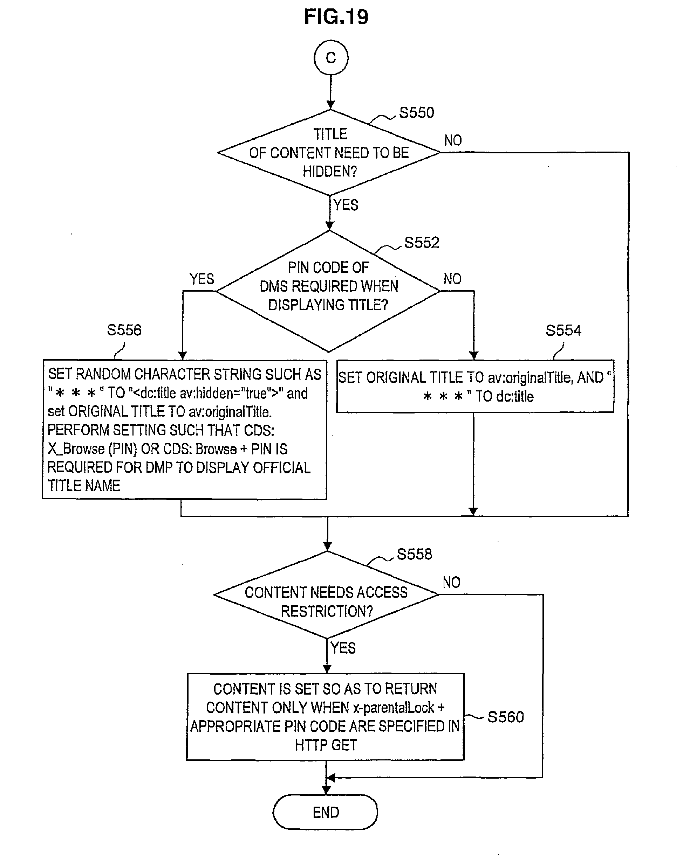

Here, CDS: Browse request or CDS: X-Browse request added with "X-PARENTALLOCK" is desired for the DMP 30 to acquire the item at the lower order of the content set with the access restriction. The tree structure management unit 220 proceeds to the process shown in FIG. 18 when not arranging the item at the lower order of the container set with the access restriction. The tree structure management unit 220 proceeds to the process shown in FIG. 19 when arranging the item at the lower order of the container set with the access restriction.

As shown in FIG. 17, the tree structure management unit 220 determines whether or not to hide the title of the content data if the setting is not to user the PIN code of the DMS 20 (S532). When hiding the title of the content data, the tree structure management unit 220 sets the true title (original title) of the content data to the "<av:originalTitle>". Furthermore, the tree structure management unit 220 sets, for example, "***" to the "<dc:title>" (S534). The content data is set so as to be returned in response to the HTTP GET including the "X-PARENTALLOCK" (S536).

Furthermore, as shown in FIG. 18, the tree structure management unit 220 determines whether or not to hide the title of the content data when not arranging the item at the lower order of the container set with the access restriction (S540). Furthermore, if determined that the title is to be hidden, the tree structure management unit 220 determines whether or not the PIN code of the DMS 20 is desired for title display in the DMP 30 (S542).

If the PIN code of the DMS 20 is desired for the title display in the DMP 30, the tree structure management unit 220 sets a random character string such as "***" in the "<dc:title av:hidden="true">" (S544). Furthermore, the tree structure management unit 220 sets the true title of the content data to the "<av:originalTitle>". Here, the setup is made such that the CDS: Browse request or the CDS: X-Browse request including the PIN code of the DMS 20 is desired to display the true title in the DMP 30.

If the PIN code of the DMS 20 is not desired for the title display in the DMP 30, the tree structure management unit 220 sets the true title of the content data to the "<av:originalTitle>". Furthermore, the tree structure management unit 220 sets "***", for example, to the "<dc:title>" (S546). The content data is set so as to be returned in response to the HTTP GET including the "X-PARENTALLOCK" and the PIN code of the DMS 20 (S548).

As shown in FIG. 19, when arranging the item at the lower order of the container set with the access restriction, the tree structure management unit 220 determines whether or not the title of the content data is to be hidden (S550). If determined that the title is to be hidden, the tree structure management unit 220 determines whether or not the PIN code of the DMS 20 desired for the title display in the DMP 30 (S552).

If the PIN code of the DMS 20 is desired for the title display in the DMP 30, the tree structure management unit 220 sets a random character string such as "***" in the "<dc:title av:hidden="true">" (S556). Furthermore, the tree structure management unit 220 sets the true title of the content data to the "<av:originalTitle>". Here, the setup is made such that the CDS: Browse request or the CDS: X-Browse request including the PIN code of the DMS 20 is desired to display the true title in the DMP 30.

If the PIN code of the DMS 20 is not desired for the title display in the DMP 30, the tree structure management unit 220 sets the true title of the content data to the "<av:originalTitle>". Furthermore, the tree structure management unit 220 sets "***", for example, to the "<dc:title>" (S554).

Moreover, if the content data desires access restriction (S558), the content data is set so as to be returned in response to the HTTP GET including the "X-PARENTALLOCK" and the PIN code of the DMS 20 (S560). In this case, the DMP 30 is desired the input of the PIN code of the DMS 20 when acquiring the title of the content data and when acquiring the content data. Therefore, the PIN code of the DMS 20 may be prepared in plurals. As a result, the acquisition of the content data by the DMP 30 can be limited while allowing acquisition of the title of the content data by the DMP 30.

### [4-2] Transmission control of metadata (FIGS. 20 and 21)

The flow in which the DMS 20 transmits the metadata to the DMP 30 will now be described with reference to FIGS. 20 and 21.

FIG. 20 is a flowchart showing a flow in which the DMS 20 transmits the metadata to the DMP 30. More specifically, FIG. 20 shows the flow of when the PIN code of the DMS 20 is desired for the title display in the DMP 30.

As shown in FIG. 20, first the DMS 20 receives the CDS: Browse added with the "X-PARENTALLOCK" from the DMP 30 (S604). When the requesting destination is the container (S608) and the access restriction is set on the target container (S612), the control unit 236 determines whether or not the PIN code contained in the CDS: Browse and the PIN code of the DMS 20 match (S620).

If the PIN code contained in the CDS: Browse and the PIN code of the DMS 20 match, the control unit 236 transmits a content list including items arranged at the lower order of the target container to the DMP 30 (S628). If the PIN code contained in the CDS: Browse and the PIN code of the DMS 20 do not match, the control unit 236 transmits an error code (e.g., 800) to the DMP 30 (S624). If the access restriction is not set on the target container (S612), the control unit 236 proceeds to the normal process (S616).

When the requesting destination is an item (S608), and display restriction is set on the title of the target item (S632), the control unit 236 determines whether or not the PIN code contained in the CDS: Browse and the PIN code of the DMS 20 match (S636). If the PIN code contained in the CDS: Browse and the PIN code of the DMS 20 match, the control unit 236 inserts the true title of the content data to the "<dc:title>" of the target item and transmits to the DMP 30 (S640). The control unit 236 may transmit the true title of the content data while being inserted in the "<av:originalTitle>".

If the PIN code contained in the CDS: Browse and the PIN code of the DMS 20 do not match, the control unit 236 transmits the error code (e.g., 800) to the DMP 30 (S624). If the display restriction is not set on the title of the target item (S632), the control unit 236 proceeds to the normal process (S616). If "<dc:title av:hidden="true">" is set to the target item, determination can be made that the title of the target item is set with the display restriction.

If the setting is to use the PIN code on the DMP 30 side, the DMS 20 may transmit the true title of the content data to the DMP 30 if "X-PARENTALLOCK" is added to the CDS: Browse. However, this is to be premised on the fact that the "X-PARENTALLOCK" is added to the CDS: Browse when the PIN code of the DMP 30 is input in the DMP 30.

FIG. 21 is a flowchart showing another example of the flow in which the DMS 20 transmits the metadata to the DMP 30. FIG. 21 shows the flow of when the PIN code of the DMS 20 is desired for the title display in the DMP 30, similar to FIG. 20.

As shown in FIG. 21, first the DMS 20 receives the CDS: X-Browse containing the PIN code from the DMP 30 (S654). When the requesting destination is the container (S658) and the access restriction is set on the target container (S662), the control unit 236 determines whether or not the PIN code contained in the CDS: X-Browse and the PIN code of the DMS 20 match (S670).

If the PIN code contained in the CDS: X-Browse and the PIN code of the DMS 20 match, the control unit 236 transmits a content list including items arranged at the lower order of the target container to the DMP 30 (S678). If the PIN code contained in the CDS: X-Browse and the PIN code of the DMS 20 do not match, the control unit 236 transmits an error code (e.g., 800) to the DMP 30 (S674). Even if the access restriction is not set on the target container (S662), the control unit 236 transmits the error code (e.g., "801" indicating that target content or item does not desire PIN code) to the DMP 30 (S674).

When the requesting destination is an item (S658), and display restriction is set on the title of the target item (S682), the control unit 236 determines whether or not the PIN code contained in the CDS: X-Browse and the PIN code of the DMS 20 match (S686). If the PIN code contained in the CDS: X-Browse and the PIN code of the DMS 20 match, the control unit 236 inserts the true title of the content data to the "<dc:title>" of the target item and transmits to the DMP 30 (S690).

If the PIN code contained in the CDS: X-Browse and the PIN code of the DMS 20 do not match, the control unit 236 transmits the error code (e.g., 800) to the DMP 30 (S674). Even if the display restriction is not set on the target item (S682), the control unit 236 transmits the error code (e.g., 801) to the DMP 30 (S674). If "<dc:title av:hidden="true">" is set to the target item, determination can be made that the title of the target item is set with the display restriction.

### [4-3] Transmission control of content data

### [4-3-1] Example of using PIN on DMS side (FIGS. 22 to 24)

The flow of the transmission control of the content data of when using the PIN code on the DMS 20 side will now be described with reference to FIGS. 22 to 24.

FIG. 22 is a flowchart showing a flow of the transmission control of the content data in the DMS 20. As shown in FIG. 22, when the DMS 20 receives the HTTP GET (content data) (S708), the control unit 236 checks whether or not the access restriction is set on the content data (S708). For instance, the control unit 236 may check the setting of the access restriction by referencing the rating of the relevant content data. If the access restriction is not set on the content data, the control unit 236 proceeds to the normal process (S712).

When the access restriction is set on the content data, and the "X-PARENTALLOCK" is added to the HTTP GET, the control unit 236 determines if the value of the "X-PARENTALLOCK" and the PIN code of the own device match (S724). If the PIN codes match, the control unit 236 transmits the relevant content data to the DMP 30 (S728). If the "X-PARENTALLOCK" is not added to the HTTP GET or the PIN codes do not match, the control unit transmits an error code (e.g., 503) to the DMP 30 (S720).

The information requiring description in the "X-PARENTALLOCK" is not limited to the PIN code, and may be user name or may be password.

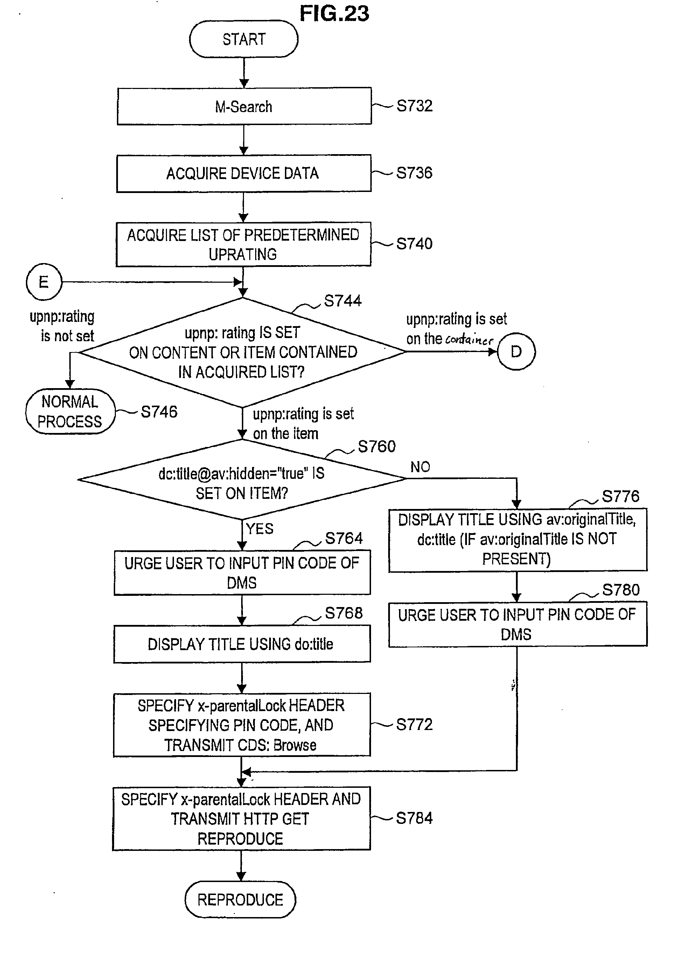

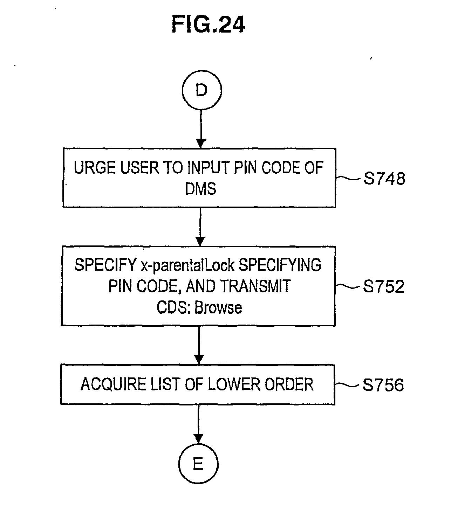

FIGS. 23 and 24 are flowcharts showing a flow in which the DMP 30 acquires the content data using the PIN code of the DMS 20. As shown in FIG. 23, the control unit 336 of the DMP 30 transmits the SSDP M-Search, and receives the SSDP Response from the DMS 20 (S732). Subsequently, the control unit 336 transmits the HHTP GET (device data) to acquire the device data of the DMS 20 from the DMS 20 (S736). Here, "Server" is described in the "<av:X_ParentalLock xmlns:av="urn:schemas-sony-com:av">" contained in the device data. Based on such description, the DMP 30 grasps that the PIN code of the DMS 20 is desired to access the DMS 20.

The control unit 336 then requests <CDS: Browse request> for a list indicating a list of metadata of a predetermined hierarchy of the metadata stored in the DMS 20 based on the user input to the input unit 320, and acquires the list (S740). The DMP 30 then proceeds to the process shown in FIG. 24 if rating is set on the container contained in the acquired list (S744).

Specifically, the display screen generating unit 328 generates a screen urging the user to input the PIN code of the DMS 20 (S748). The control unit 336 adds the "X-PARENTALLOCK" having a value of the PIN code input by the user to the header and transmits the CDS: Browse request (S752). As a result, the DMP 30 can acquire the list of the lower order of the container set with the rating (S756). The DMP 30 then returns to the process of S744 of FIG. 23.

The DMP 30 proceeds to the normal process (S746) if rating is set on the container and the item contained in the acquired list (S744).

If the rating is set on the item contained in the acquired list (S744), the control unit checks whether or not the "<dc:title av:hidden="true">" is set on the item (S760). If the "<dc:title av:hidden="true">" is set on the item, the display screen generating unit 328 generates a screen urging the user to input the PIN code of the DMS 20 (S764). Meanwhile, the display screen generating unit 328 displays a character string such as "***" described in the "<dc:title av:hidden="true">" as the title of the content data (S768).

Thereafter, the control unit 336 adds the "X-PARENTALLOCK" containing the PIN code input by the user to the header, and transmits the CDS: Browse request (S772). If the PIN code input by the user is correct as a result, the "<dc:title>" described with the true title is transmitted from the DMS 20, and thus the display screen generating unit 328 displays the true title. If the PIN code input by the user is wrong, however, an error code is transmitted from the DMS 20. Furthermore, the control unit 336 transmits the HTTP GET (content data) including the "X-PARENTALLOCK" in the header based on the user input to the input unit 320 to acquire the content data (S784).

If the "<dc:title av:hidden="true">" is not set on the item (S760), the display screen generating unit 328 displays the title described in the "<av:originalTitle>" (S776). If the "<av:originalTitle>" is not present, the display screen generating unit 328 may display the title described in the "<dc:title>". Furthermore, the display screen generating unit 328 generates a screen urging the user to input the PIN code of the DMS 20 (S780). The DMP 30 then proceeds to the process of S784.

### [4-3-2] Example of using PIN on DMP side (FIGS. 25 and 26)

The flow of the transmission control of the content data of when using the PIN code on the DMP 30 side will now be described with reference to FIGS. 25 and 26.

FIG. 25 is a flowchart showing the flow of the transmission control of the content data in the DMS 20. As shown in FIG. 25, when the DMS 20 receives the HTTP GET (content data) from the DMP 30 (S804), the control unit 236 checks whether or not the access restriction is set on the target content data (S808). The control unit 236 then proceeds to the normal process if the access restriction is not set on the target content data (S812).

If the access restriction is set on the target content data, the control unit 236 checks whether or not the "X-PARENTALLOCK" is added to the header of the HTTP GET (content data) (S816). If the "X-PARENTALLOCK" is not added, the control unit 236 transmits an error code to the DMP 30 (S824). If the "X-PARENTALLOCK" is added, the control unit 236 transmits the target content data to the DMP 30 of the requesting source (S820).

FIG. 26 is a flowchart showing a flow in which the DMP 30 acquires content data using the PIN code of the DMP 30.
As shown in FIG. 26, the control unit 336 of the DMP 30 transmits the SSDP M-search, and receives the SSDP Response from the DMS 20 (S832). Subsequently, the control unit 336 transmits the HHTP GET (device data) to acquire the device data of the DMS 20 from the DMS 20 (S836). Here, "Client" is described in the "<av:X_ParentalLock xmlns:av="urn:schemas-sony-com:av">" contained in the device data. Based on such description, the DMP 30 grasps that the PIN code of the DMP 30 is desired to access the DMS 20.

The control unit 336 then requests <CDS: Browse request> for a list indicating a list of metadata of a predetermined hierarchy of the metadata stored in the DMS 20 based on the user input to the input unit 320, and acquires the list (S840).

The control unit 336 then references the "<upnp:rating>" contained in the acquired list and checks whether or not the rating is set on the acquired item (S844).
If confirmed by the control unit 336 that the rating is not set on the acquired item (S844), the display screen generating unit 328 displays the title described in the "<dc:title>" (S848).

If confirmed by the control unit 336 that the rating is not set on the acquired item (S844), the display screen generating unit 328 displays the title described in the "<dc:title>" or the "<av:originalTitle>" (S852). When the user thereafter desires the reproduction of the content data corresponding to the acquired item, the display screen generating unit 328 generates a screen urging the user to input the PIN code of the DMP 30 (S856). The control unit 336 then determines whether or not the PIN code input by the user and the PIN code of the DMP 30 match (S860).

If determined that the PIN codes do not match, the DMP 30 returns to the process from S856. If determined that the PIN codes match, the control unit 336 adds the "X-PARENTALLOCK" to the header of the HTTP GET (content data) and transmits to the DMS 20 (S864). As a result, the target content data is transmitted from the DMS 20, and the DMP 30 acquires and reproduces the content data.

### [5] Conclusion

As described above, in the present embodiment, for example, if the PIN of the DMS 20 or the DMP 30 is input at the DMP 30, the control unit 236 transmits the content data set with the rating to the DMP 30. If the PIN code of the DMS 20 or the DMP 30 is input at the DMP 30, the control unit 236 transmits the true title of the content data set with the rating to the DMP 30. In such configuration, if the DMP 30 does not have parental control function requesting for the PIN input, the DMP 30 may not acquire the content data and the true title of the content data. If the DMP 30 has parental control function requesting for the PIN input, the content data and the true title of the content data can be provided to the DMP 30.

If the CDS: Browse request received from the DMP 30 is not a request based on the input of the PIN of the DMS 20 or the DMP 30, the control unit may transmit a character string set as the "<dc:title>". If the CDS: Browse request is a request based on the input of the PIN, the control unit 236 may describe the true title set as the "<av:originalTitle>" in the "<dc:title>", and transmit. In such configuration, if the DMP 30 does not have parental control function requesting the PIN input, the DMP 30 recognizes and displays the character string set as the "<dc:title>" as the title of the content data. If the DMP 30 has parental control function requesting the PIN input, the true title of the content data can be displayed on the DMP 30.

The control unit 236 may transmit the metadata at the lower order if the CDS: Browse request with respect to the metadata at the lower order of the metadata set with the rating is present, and the CDS: Browse request is a request based on the PIN input. The control unit 236 may not transmit the metadata at the lower order if the CDS: Browse request with respect to the metadata at the lower order of the metadata set with the rating is present, and the CDS: Browse request is not a request based on the PIN input. In such configuration, if the DMP 30 does not have parental control function requesting the PIN input, the DMP 30 recognizes that the metadata is not arranged at the lower order of the metadata set with the rating. If the DMP 30 has parental control function requesting the PIN input, the information related to the metadata at the lower order can be displayed on the DMP 30.

Therefore, according to the present embodiment, the parental control in the DMP 30 can be substantially realized by the control of the DMS 20 regardless of whether or not the DMP 30 corresponds to a particular parental control function.

It should be understood by those skilled in the art that various modifications, combinations, sub-combinations and alterations may occur depending on design requirements and other factors insofar as they are within the scope of the appended claims or the equivalents thereof.

For instance, each step in the processes of the DMS 20 and the DMP 30 of the present specification may not be processed in time-series along the order described as the flowchart. For instance, each step in the processes of the DMS 20 and the DMP 30 may include processes executed in parallel or individually (e.g., parallel process or process by object).

A computer program for having the hardware of the CP 201, the ROM 202, the RAM 203, and the like incorporated in the DMS 20 and the DMP 30 exhibit functions similar to each configuration of he DMS 20 and the DMP 30 may be created.
A storage medium stored with such control program may be provided. The respective function blocks shown in the function block diagram of FIG. 4 or FIG. 9 may be configured to include hardware, so that the series of processes can be realized by hardware.

## Claims

1. A data communication device comprising:
a setup unit for setting a true title of content data as predetermined data of content data set with viewing restriction, and setting a character string different from the true title of the content data as title data of the content data;
a communication unit for performing data communication with a data requesting device; and
a control unit for controlling transmission from the communication unit of the true title set as the predetermined data and the character string set as the title data based on whether or not a transmission request received from the data requesting device by the communication unit is a request based on input of predetermined information.

2. The data communication device according to claim 1, wherein the control unit transmits the character string as the title data from the communication unit if the transmission request received from the data requesting device by the communication unit is not the request based on the input of the predetermined information, and transmits the true title as the title data from the communication unit if the transmission request received from the data requesting device by the communication unit is the request based on the input of the predetermined information.

3. The data communication device according to claim 1, wherein the control unit does not transmit the true title set as the predetermined data from the communication unit if the transmission request received from the data requesting device by the communication unit is not the request based on the input of the predetermined information, and transmits the true title set as the predetermined data from the communication unit if the transmission request received from the data requesting device by the communication unit is the request based on the input of the predetermined information.

4. The data communication device according to claim 1, wherein
the data communication device further includes a storage unit for hierarchically storing metadata of content data including the predetermined data or the title data at a lower order of higher order metadata, and
the control unit transmits metadata arranged at a lower order of higher order metadata to the data requesting device if a transmission request of metadata arranged at a lower order of the higher order metadata set with viewing restriction is received from the data requesting device by the communication unit, and the transmission request of the metadata is a request based on input of the predetermined information.

5. The data communication device according to claim 1, further comprising a storage unit for storing content data, wherein
the control unit transmits the content data from the communication unit if the transmission request of the content data set with the viewing restriction in the storage unit is received from the data requesting device by the communication unit and the transmission request of the content data contains specific information.

6. A data communication method comprising the steps of:
setting a true title of content data as predetermined data of content data set with viewing restriction, and setting a character string different from the true title of the content data as title data of the content data;
receiving a transmission request from a data requesting device; and
controlling transmission from the communication unit of the true title set as the predetermined data and the character string set as the title data based on whether or not the transmission request is a request based on input of predetermined information.

7. A data requesting device comprising:
a communication unit for communication with a data communication device for setting a true title of content data as predetermined data of content data set with viewing restriction, setting a character string different from the true title of the content data as title data of the content data, receiving a transmission request, and controlling transmission from the communication unit of the true title set as the predetermined data and the character string set as the title data based on whether or not the transmission request is a request based on input of predetermined information;
an input unit input with predetermined information by a user; and
a control unit for transmitting the transmission request based on the input of the predetermined information from the communication unit to the data communication device.

8. A data requesting method comprising the steps of:
inputting predetermined information by a user; and
transmitting a transmission request based on input of the predetermined information to a data communication device for setting a true title of content data as predetermined data of content data set with viewing restriction, setting a character string different from the true title of the content data as title data of the content data, receiving a certain request, and controlling transmission from a communication unit of the true title set as the predetermined data and the character string set as the title data based on whether or not the request is the transmission request based on input of the predetermined information.

9. A data communication system comprising:
a data requesting device including,
a first communication unit for performing data communication,
an input unit input with predetermined information by a user, and
a first control unit for transmitting a transmission request based on the input of the predetermined information from the first communication unit; and
a data communication device including,
a setup unit for setting a true title of content data as predetermined data of content data set with viewing restriction, and setting a character string different from the true title of the content data as title data of the content data;
a second communication unit for performing data communication with the data requesting device; and
a second control unit for controlling transmission from the communication unit of the true title set as the predetermined data and the character string set as the title data based on whether or not a transmission request received from the data requesting device by the communication unit is a request based on the input of the predetermined information.

10. A data communication device comprising:
a storage unit for storing content data and metadata indicating whether or not viewing restriction is set on the content data in correspondence to each other;
a communication unit for receiving a transmission request of arbitrary content data from a data requesting device; and
a control unit for not transmitting the arbitrary content data from the communication unit if the viewing restriction is set on the arbitrary content data and specific information is not contained in the transmission request, and transmitting the arbitrary content data from the communication unit if the viewing restriction is set on the arbitrary content data and the specific information is contained in the transmission request.

11. A data communication method comprising the steps of:
receiving a transmission request of arbitrary content data from a data requesting device;
not transmitting the arbitrary content data if viewing restriction is set on the arbitrary content data and specific information is not contained in the transmission request; and
transmitting the arbitrary content data if the viewing restriction is set on the arbitrary content data and the specific information is contained in the transmission request.

12. A data requesting device comprising:
a communication unit communicating with a data communication device for receiving a transmission request of arbitrary content data, not transmitting the arbitrary content data if viewing restriction is set on the arbitrary content data and specific information is not contained in the transmission request, and transmitting the arbitrary content data if the viewing restriction is set on the arbitrary content data and the specific information is contained in the transmission request;
an input unit performed with a predetermined operation input by a user; and
a control unit for transmitting the transmission request containing the specific information from the communication unit to the data communication device when the predetermined operation input is performed.

13. A data requesting method comprising the steps of:
performing a predetermined operation input by a user; and
transmitting a transmission request containing specific information to a data communication device when the predetermined operation input is performed, the data communication device receiving a request of arbitrary content data, not transmitting the arbitrary content data if viewing restriction is set on the arbitrary content data and specific information is not contained in the request, and transmitting the arbitrary content data if the viewing restriction is set on the arbitrary content data and the request is the transmission request containing the specific information.

14. A data communication system comprising:
a data requesting device including,
a first communication unit for performing data communication,
an input unit performed with a predetermined operation input by a user, and
a first control unit for transmitting a transmission request containing specific information from the communication unit to the data communication device when the predetermined operation input is performed; and
a data communication device including,
a storage unit for storing content data and metadata indicating whether or not viewing restriction is set on the content data in correspondence to each other,
a second communication unit for receiving a request of arbitrary content data from the data requesting device, and
a second control unit for not transmitting the arbitrary content data from the second communication unit if the viewing restriction is set on the arbitrary content data and specific information is not contained in the request, and transmitting the arbitrary content data from the second communication unit if the viewing restriction is set on the arbitrary content data and the request is the transmission request containing the specific information.
